# EUROPEAN PATENT APPLICATION

(11) **EP 2 571 246 A1**
(43) Date of publication of application: **20.03.2013**
(21) Application number: 11780346.0
(22) Date of filing: 21.04.2011
(51) Int. Cl.: H04N 5/225, G03B 17/14, G03B 35/08, H04N 13/02, H04N 101/00

(54) **CAMERA BODY, INTERCHANGEABLE LENS UNIT, IMAGE CAPTURING DEVICE, METHOD FOR CONTROLLING CAMERA BODY, METHOD FOR CONTROLLING INTERCHANGEABLE LENS UNIT, PROGRAM, AND RECORDING MEDIUM ON WHICH PROGRAM IS RECORDED**

(30) Priority: 14.05.2010 JP 2010112670
(71) Applicant: Panasonic Corporation, Kadoma-shi Osaka 571-8501 (JP)
(72) Inventor: UEDA, Hiroshi, Osaka 540-6207 (JP); SHIBUNO, Koji, Osaka 540-6207 (JP); IKEDA, Takahiro, Osaka 540-6207 (JP); OKAMOTO, Mitsuyoshi, Osaka 540-6207 (JP); HAYASHI, Takayuki, Osaka 540-6207 (JP)
(74) Representative: Eisenführ, Speiser & Partner
(86) International application number: PCT/JP2011/002343
(87) International publication number: WO 2011/142086

(57) **Abstract**

The camera body (100) includes the body mount (150), the CMOS imaging sensor (110), and the identification information acquisition section (142). The body mount (150) is provided so that the interchangeable lens unit (200) can be mounted. The CMOS imaging sensor (110) is configured to convert an optical image into an image signal. The identification information acquisition section (142) is configured to acquire lens identification information (F1) indicating whether or not an interchangeable lens unit (200) is compatible with three-dimensional imaging from the interchangeable lens unit (200) mounted to the body mount (150).

## Description

### TECHNICAL FIELD

The technology disclosed herein relates to a camera body to which an interchangeable lens unit can be mounted, and to an interchangeable lens unit and an imaging device. Also, the technology disclosed herein relates to method for controlling the camera body, method for controlling the interchangeable lens, a program and a storage medium storing the program.

### BACKGROUND ART

An example of a known imaging device is an interchangeable lens type of digital camera. An interchangeable lens digital camera comprises an interchangeable lens unit ad a camera body. This camera body has an imaging element such as a charge coupled device (CCD) image sensor or a complementary metal oxide semiconductor (CMOS) image sensor. The imaging element converts an optical image formed by the optical system into an image signal. This allows image data about a subject to be acquired.

### CITATION LIST

### PATENT LITERATURE

Patent Literature 1: Japanese Laid-Open Patent Application H7-274214
Patent Literature 2: Japanese Laid-Open Patent Application 2003-92770

### SUMMARY OF INVENTION

Development of so-called three-dimensional displays has been underway for some years now. This has been accompanied by the development of imaging devices that produce what is known as stereo image data (image data for three-dimensional display use, including a left-eye image and a right-eye image).

However, a 3D imaging-use optical system has to be used to produce a stereo image having disparity.

In view of this, there has been proposed a video camera that automatically switches between two- and three-dimensional imaging modes on the basis of an adapter for three-dimensional imaging (see Patent Literature 1, for example).

However, with the video camera discussed in Patent Literature 1, all that is done is simply to mount a three-dimensional imaging-use optical system at the front of an ordinary optical system. Therefore, even if this technology is employed for an interchangeable lens imaging device, the camera body cannot be made compatible with many different kinds of interchangeable lens unit, including interchangeable lens units that are compatible with three-dimensional imaging.

Patent Literature 2 discusses the use of a three-dimensional imaging-use optical system that employs a time-division imaging system, in an interchangeable lens camera.

With Patent Literature 2, however, there is no specific proposal of a camera body that is compatible with many different kinds of interchangeable lens unit, such as interchangeable lens units that are or are not compatible with three-dimensional imaging.

Also, we can foresee cases in which a three-dimensional imaging-use interchangeable lens unit is mounted to a camera body that is not compatible with three-dimensional imaging. If imaging is performed in such a case, image data that is not suited to three-dimensional display may be acquired, or image data that is not even suited to two-dimensional display may be acquired. Therefore, there is a need for an interchangeable lens unit that will be compatible with many different kinds of camera body.

A camera body according to a first aspect comprises a body mount, an imaging element, and an identification information acquisition section. The body mount is provided so that an interchangeable lens unit can be mounted. The imaging element is configured to convert an optical image into an image signal. The identification information acquisition section is configured to acquire lens identification information indicating whether or not an interchangeable lens unit is compatible with three-dimensional imaging from the interchangeable lens unit mounted to the body mount.

With this camera body, the lens identification information is acquired by the identification information acquisition section from the interchangeable lens unit mounted to the body mount. Accordingly, when an interchangeable lens unit that is compatible with three-dimensional imaging is mounted to a body mount, it can be determined that the interchangeable lens unit is compatible with three-dimensional imaging on the basis of the lens identification information. Conversely, if an interchangeable lens unit that is not compatible with three-dimensional imaging is mounted to a camera body, it can be determined that the interchangeable lens unit is not compatible with three-dimensional imaging on the basis of the lens identification information.

Thus, this camera body can be compatible with various kinds of interchangeable lens unit, such as interchangeable lens units that are and are not compatible with three-dimensional imaging.

A camera body according to a second aspect comprises a body mount, an imaging element, and a controller. The body mount is provided so that an interchangeable lens unit can be mounted. The imaging element has a light receiving face configured to receive an optical image, and is configured to convert the optical image into an image signal. The controller is configured to produce left-eye image data and right-eye image data from image signals produced by the imaging element. The light receiving face has a first region and a second region disposed adjacent to the first region. If the interchangeable lens unit mounted to the body mount has a first optical system configured to form a left-eye optical image in a first region and a second optical system configured to form a right-eye optical image in a second region, the controller produces left-eye image data from an image signal corresponding to the first region, and produces right-eye image data from an image signal corresponding to the second region. If the interchangeable lens unit mounted to the body mount has a third optical system configured to form a left-eye optical image in a second region and a fourth optical system configured to form a right-eye optical image in a first region, the controller produces left-eye image data from an image signal corresponding to the second region, and produces right-eye image data from an image signal corresponding to the first region.

With this camera body, left-eye image data and right-eye image data can be properly produced by the camera body whether the interchangeable lens unit has first and second optical systems, or whether the interchangeable lens unit has third and fourth optical systems. Therefore, this camera body can be compatible with various kinds of interchangeable lens unit.

A camera body according to a third aspect comprises a body mount, an imaging element, and a controller. The body mount is provided so that an interchangeable lens unit can be mounted. The imaging element has a light receiving face configured to receive an optical image, and is configured to convert the optical image into an image signal. The controller is configured to produce left-eye image data and right-eye image data from image signals produced by the imaging element. The controller produces left-eye image data and right-eye image data such that the top and bottom of a pair of images reproduced from left-eye image data and right-eye image data substantially coincide with the top and bottom of the subject, when the interchangeable lens unit mounted to the body mount is configured to form an optical image that is rotated with respect to the subject on the light receiving face. When the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject. When the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject.

With this camera body, when the interchangeable lens unit mounted to the body mount is configured to form an optical image that is rotated with respect to the subject on the light receiving face, left-eye image data and right-eye image data will be produced by the controller so that the top and bottom of a pair of images reproduced from left-eye image data and right-eye image data substantially coincide with the top and bottom of the subject. More specifically, when the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject. Also, when the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject. Therefore, this camera body can be compatible with various kinds of interchangeable lens unit.

The phrase "the top and bottom of a pair of images reproduced from left-eye image data and right-eye image data substantially coincide with the top and bottom of the subject" used here encompasses not only a situation in which the top and bottom of a pair of images reproduced from left-eye image data and right-eye image data completely coincide with the top and bottom of the subject, but also a situation in which the top and bottom of a pair of images reproduced from left-eye image data and right-eye image data deviates from the top and bottom of the subject within the extent that it is still possible to obtain the effect of being compatible with various kinds of interchangeable lens unit.

The phrase "a pair of images reproduced from left-eye image data and right-eye image data" used here means, for example, the stereo image for stereoscopic view displayed on the display unit included in a camera body or on the display device provided aside from the camera body. For example, it can be determined whether the top and bottom of a pair of images reproduced from left-eye image data and right-eye image data substantially coincide with the top and bottom of the subject, on the basis of a state in which a longitudinal direction of the display of the display unit or device coincides with a horizontal direction.

A camera body according to a fourth aspect comprises a body mount, an imaging element, and a controller. The body mount is provided so that an interchangeable lens unit can be mounted. The imaging element has a light receiving face configured to receive an optical image, and is configured to convert the optical image into an image signal. The controller is configured to produce left-eye image data and right-eye image data from image signals produced by the imaging element. The controller produces left-eye image data such that the top and bottom and the left and right of a left-eye image reproduced from left-eye image data substantially coincide with the top and bottom and the left and right of the subject, when the interchangeable lens unit mounted to the body mount is configured to mirror-invert a left-eye optical image corresponding to left-eye image data on the light receiving face with respect to the subject.

With this camera body, when the interchangeable lens unit mounted to the body mount is configured to mirror-invert a left-eye optical image corresponding to left-eye image data on the light receiving face with respect to the subject, left-eye image data will be produced by the controller such that the top and bottom and the left and right of a left-eye image reproduced from left-eye image data substantially coincide with the top and bottom and the left and right of the subject. Therefore, this camera body can be compatible with various kinds of interchangeable lens unit.

The phrase "the top and bottom and the left and right of a left-eye image reproduced from left-eye image data substantially coincide with the top and bottom and the left and right of the subject" used here encompasses not only a situation in which the top and bottom and the left and right of the left-eye image reproduced from left-eye image data completely coincide with the top and bottom and the left and right of the subject, but also a situation in which the top and bottom and the left and right of the left-eye image reproduced from left-eye image data deviates from the top and bottom and the left and right of the subject within the extent that it is still possible to obtain the effect of being compatible with various kinds of interchangeable lens unit.

The phrase "a left-eye image reproduced from left-eye image data" used here means, for example, the left-eye image displayed on the display unit included in a camera body or on the display device provided aside from the camera body. For example, it can be determined whether the top and bottom and the left and right of the left-eye image reproduced from the left-eye image data substantially coincide with the top and bottom and the left and right of the subject, on the basis of a state in which a longitudinal direction of the display of the display unit or device coincides with a horizontal direction.

A camera body according to a fifth aspect comprises a body mount, an imaging element, and a controller. The body mount is provided so that an interchangeable lens unit can be mounted. The imaging element has a light receiving face configured tofor receiving receive an optical image, and is configured to converts the optical image into an image signal. When a interchangeable lens unit configured to subject the right-eye optical image corresponding to the right-eye image data to mirror inversion on the light receiving face with respect to the subject has been mounted to the body mount, the controller produces the right-eye image data such that the top and bottom and the left and right of the right-eye image reproduced from the right-eye image data will substantially coincide with the top and bottom and the left and right of the subject.

With this camera body, when the interchangeable lens unit mounted to the body mount is configured to mirror-invert a right-eye optical image corresponding to right-eye image data on the light receiving face with respect to the subject, right-eye image data will be produced by the controller such that the top and bottom and the left and right of a right-eye image reproduced from right-eye image data substantially coincide with the top and bottom and the left and right of the subject. Therefore, this camera body can be compatible with various kinds of interchangeable lens unit.

The phrase "the top and bottom and the left and right of a right-eye image reproduced from right-eye image data substantially coincide with the top and bottom and the left and right of the subject" used here encompasses not only a situation in which the top and bottom and the left and right of the right-eye image reproduced from right-eye image data completely coincide with the top and bottom and the left and right of the subject, but also a situation in which the top and bottom and the left and right of the right image reproduced from right-eye image data deviates from the top and bottom and the left and right of the subject within the extent that it is still possible to obtain the effect of being compatible with various kinds of interchangeable lens unit.

The phrase "a right-eye image reproduced from right-eye image data" used here means, for example, the right-eye image displayed on the display unit included in a camera body or on the display device provided aside from the camera body. For example, it can be determined whether the top and bottom and the left and right of the right-eye image reproduced from right-eye image data substantially coincide with the top and bottom and the left and right of the subject, on the basis of a state in which a longitudinal direction of the display of the display unit or device coincides with a horizontal direction.

A camera body according to a sixth aspect comprises a body mount, an imaging element, and a controller. The body mount is provided so that an interchangeable lens unit can be mounted. The imaging element is configured to convert an optical image into an image signal. The controller restricts execution of three-dimensional imaging mode at least until an operation by the user, when an interchangeable lens unit that is not compatible with three-dimensional imaging has been mounted to the body mount.

With this camera body, the controller restricts execution of three-dimensional imaging mode at least until an operation by the user, when an interchangeable lens unit that is not compatible with three-dimensional imaging has been mounted to the body mount. Therefore, this camera body can be compatible with various kinds of interchangeable lens unit.

An interchangeable lens unit according to a seventh aspect comprises a three-dimensional optical system, a lens-side determination section, and a state information production section. The three-dimensional optical system is configured to form an optical image of a subject for stereoscopic view. The lens-side determination section is configured to determine whether or not the camera body is compatible with three-dimensional imaging. The state information production section produces restrictive information used for restricting the photographing of the camera body, when the lens-side determination section has determined that the camera body is not compatible with three-dimensional imaging.

With this interchangeable lens unit, the state information production section produces restrictive information used for restricting the photographing of the camera body when the lens-side determination section has determined that the camera body is not compatible with three-dimensional imaging. Therefore, this prevents the accidental use of a three-dimensional optical system to perform two-dimensional imaging with the camera body. That is, this interchangeable lens unit is compatible with various kinds of camera body, such as camera bodies that are and are not compatible with three-dimensional imaging.

A method according to an eighth aspect is a method for controlling a camera body configured to produce image data on the basis of an optical image formed by an interchangeable lens unit, and comprises an identification information acquisition step in which lens identification information indicating whether or not the interchangeable lens unit is compatible with three-dimensional imaging can be acquired from the interchangeable lens unit mounted to the body mount.

With this method, the lens identification information is acquired by the identification information acquisition section from the interchangeable lens unit mounted to the body mount. Accordingly, when an interchangeable lens unit that is compatible with three-dimensional imaging is mounted to a body mount, it can be determined that the interchangeable lens unit is compatible with three-dimensional imaging on the basis of the lens identification information. Conversely, if an interchangeable lens unit that is not compatible with three-dimensional imaging is mounted to a camera body, it can be determined that the interchangeable lens unit is not compatible with three-dimensional imaging on the basis of the lens identification information.

Thus, the camera body using this method can be compatible with various kinds of interchangeable lens unit, such as interchangeable lens units that are and are not compatible with three-dimensional imaging.

A program according to a ninth aspect is a program configured to cause a computer to perform a method for controlling a camera body configured to produce image data on the basis of an optical image formed by an interchangeable lens unit, and comprises an identification information acquisition step in which lens identification information indicating whether or not the interchangeable lens unit is compatible with three-dimensional imaging can be acquired from the interchangeable lens unit mounted to the body mount.

When this program is executed in the camera body, the lens identification information is acquired by the identification information acquisition section from the interchangeable lens unit mounted to the body mount. Accordingly, when an interchangeable lens unit that is compatible with three-dimensional imaging is mounted to a body mount, it can be determined that the interchangeable lens unit is compatible with three-dimensional imaging on the basis of the lens identification information. Conversely, if an interchangeable lens unit that is not compatible with three-dimensional imaging is mounted to a camera body, it can be determined that the interchangeable lens unit is not compatible with three-dimensional imaging on the basis of the lens identification information.

Thus, the camera body using this program can be compatible with various kinds of interchangeable lens unit, such as interchangeable lens units that are and are not compatible with three-dimensional imaging.

A computer-readable storage medium according to a tenth aspect is a storage medium storing a program configured to cause a computer to perform a method for controlling a camera body configured to produce image data on the basis of an optical image formed by an interchangeable lens unit, and comprises an identification information acquisition step in which lens identification information indicating whether or not the interchangeable lens unit is compatible with three-dimensional imaging can be acquired from the interchangeable lens unit mounted to the body mount.

When the program stored in this storage medium is executed in the camera body, the lens identification information is acquired by the identification information acquisition section from the interchangeable lens unit mounted to the body mount. Accordingly, when an interchangeable lens unit that is compatible with three-dimensional imaging is mounted to a body mount, it can be determined that the interchangeable lens unit is compatible with three-dimensional imaging on the basis of the lens identification information. Conversely, if an interchangeable lens unit that is not compatible with three-dimensional imaging is mounted to a camera body, it can be determined that the interchangeable lens unit is not compatible with three-dimensional imaging on the basis of the lens identification information.

Thus, the camera body using this program stored in this storage medium can be compatible with various kinds of interchangeable lens unit, such as interchangeable lens units that are and are not compatible with three-dimensional imaging.

A method according to an eleventh aspect is a method for controlling a camera body configured to produce left-eye image data and right-eye image data on the basis of an optical image formed by an interchangeable lens unit, and comprises the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

With this method, left-eye image data and right-eye image data can be properly produced by the camera body whether the interchangeable lens unit has first and second optical systems, or whether the interchangeable lens unit has third and fourth optical systems. Therefore, this camera body can be compatible with various kinds of interchangeable lens unit.

A program according to a twelfth aspect is a program configured to cause a computer to perform a method for controlling a camera body configured to produce image data on the basis of an optical image formed by an interchangeable lens unit, the method comprising the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

With this program is executed in the camera body, left-eye image data and right-eye image data can be properly produced by the camera body whether the interchangeable lens unit has first and second optical systems, or whether the interchangeable lens unit has third and fourth optical systems. Therefore, this camera body can be compatible with various kinds of interchangeable lens unit.

A computer-readable storage medium according to a thirteenth aspect is a storage medium storing a program configured to cause a computer to perform a method for controlling a camera body configured to produce image data on the basis of an optical image formed by an interchangeable lens unit, and the method comprising the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

With the program stored in this storage medium is executed in the camera body, left-eye image data and right-eye image data can be properly produced by the camera body whether the interchangeable lens unit has first and second optical systems, or whether the interchangeable lens unit has third and fourth optical systems. Therefore, this camera body can be compatible with various kinds of interchangeable lens unit.

A method according to a fourteenth aspect is a method for controlling a camera body configured to produce image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

With this method, when the interchangeable lens unit mounted to the body mount is configured to form an optical image that is rotated with respect to the subject on the light receiving face, left-eye image data and right-eye image data will be produced by the controller so that the top and bottom of a pair of images reproduced from left-eye image data and right-eye image data substantially coincide with the top and bottom of the subject. More specifically, when the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject. Also, when the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject. Therefore, the camera body using this method can be compatible with various kinds of interchangeable lens unit.

A program according to a fifteenth aspect is a program configured to cause a computer to perform a method for controlling a camera body configured to produce image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

With this program is executed in the camera body, when the interchangeable lens unit mounted to the body mount is configured to form an optical image that is rotated with respect to the subject on the light receiving face, left-eye image data and right-eye image data will be produced by the controller so that the top and bottom of a pair of images reproduced from left-eye image data and right-eye image data substantially coincide with the top and bottom of the subject. More specifically, when the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject. Also, when the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject. Therefore, the camera body using this program can be compatible with various kinds of interchangeable lens unit.

A computer-readable storage medium according to a sixteenth aspect is a storage medium storing a program configured to cause a computer to perform a method for controlling a camera body configured to produce image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

With the program stored in this storage medium is executed in the camera body, when the interchangeable lens unit mounted to the body mount is configured to form an optical image that is rotated with respect to the subject on the light receiving face, left-eye image data and right-eye image data will be produced by the controller so that the top and bottom of a pair of images reproduced from left-eye image data and right-eye image data substantially coincide with the top and bottom of the subject. More specifically, when the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject. Also, when the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject. Therefore, the camera body using the program stored in this storage medium can be compatible with various kinds of interchangeable lens unit.

The phrase "the top and bottom of a pair of images reproduced from left-eye image data and right-eye image data substantially coincide with the top and bottom of the subject" used here encompasses not only a situation in which the top and bottom of a pair of images reproduced from left-eye image data and right-eye image data completely coincide with the top and bottom of the subject, but also a situation in which the top and bottom of a pair of images reproduced from left-eye image data and right-eye image data deviates from the top and bottom of the subject within the extent that it is still possible to obtain the effect of being compatible with various kinds of interchangeable lens unit.

The phrase "a pair of images reproduced from left-eye image data and right-eye image data" used here means, for example, the stereo image for stereoscopic view displayed on the display unit included in a camera body or on the display device provided aside from the camera body. For example, it can be determined whether the top and bottom of a pair of images reproduced from left-eye image data and right-eye image data substantially coincide with the top and bottom of the subject, on the basis of a state in which a longitudinal direction of the display of the display unit or device coincides with a horizontal direction.

A method according to a seventeenth aspect is a method for controlling a camera body configured to produce image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

With this method, when the interchangeable lens unit mounted to the body mount is configured to mirror-invert a left-eye optical image corresponding to left-eye image data on the light receiving face with respect to the subject, left-eye image data will be produced by the controller such that the top and bottom and the left and right of a left-eye image reproduced from left-eye image data substantially coincide with the top and bottom and the left and right of the subject. Therefore, the camera body using this method can be compatible with various kinds of interchangeable lens unit.

A program according to an eighteenth aspect is a program configured to cause a computer to perform a method for controlling a camera body configured to produce image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

With this program is executed in the camera body, when the interchangeable lens unit mounted to the body mount is configured to mirror-invert a left-eye optical image corresponding to left-eye image data on the light receiving face with respect to the subject, left-eye image data will be produced by the controller such that the top and bottom and the left and right of a left-eye image reproduced from left-eye image data substantially coincide with the top and bottom and the left and right of the subject. Therefore, the camera body using this program can be compatible with various kinds of interchangeable lens unit.

A computer-readable storage medium according to a nineteenth aspect is a storage medium storing a program configured to cause a computer to perform a method for controlling a camera body configured to produce image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

With the program stored in this storage medium is executed in the camera body, when the interchangeable lens unit mounted to the body mount is configured to mirror-invert a left-eye optical image corresponding to left-eye image data on the light receiving face with respect to the subject, left-eye image data will be produced by the controller such that the top and bottom and the left and right of a left-eye image reproduced from left-eye image data substantially coincide with the top and bottom and the left and right of the subject. Therefore, the camera body using the program stored in this storage medium can be compatible with various kinds of interchangeable lens unit.

The phrase "the top and bottom and the left and right of a left-eye image reproduced from left-eye image data substantially coincide with the top and bottom and the left and right of the subject" used here encompasses not only a situation in which the top and bottom and the left and right of the left-eye image reproduced from left-eye image data completely coincide with the top and bottom and the left and right of the subject, but also a situation in which the top and bottom and the left and right of the left-eye image reproduced from left-eye image data deviates from the top and bottom and the left and right of the subject within the extent that it is still possible to obtain the effect of being compatible with various kinds of interchangeable lens unit.

The phrase "a left-eye image reproduced from left-eye image data" used here means, for example, the left-eye image displayed on the display unit included in a camera body or on the display device provided aside from the camera body. For example, it can be determined whether the top and bottom and the left and right of the left-eye image reproduced from the left-eye image data substantially coincide with the top and bottom and the left and right of the subject, on the basis of a state in which a longitudinal direction of the display of the display unit or device coincides with a horizontal direction.

A method according to a twentieth aspect is a method for controlling a camera body configured to produce image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

With this method, when the interchangeable lens unit mounted to the body mount is configured to mirror-invert a right-eye optical image corresponding to right-eye image data on the light receiving face with respect to the subject, right-eye image data will be produced by the controller such that the top and bottom and the left and right of a right-eye image reproduced from right-eye image data substantially coincide with the top and bottom and the left and right of the subject. Therefore, the camera body using this method can be compatible with various kinds of interchangeable lens unit.

A program according to a twenty-first aspect is a program configured to cause a computer to perform a method for controlling a camera body configured to produce image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

With this program is executed in the camera body, when the interchangeable lens unit mounted to the body mount is configured to mirror-invert a right-eye optical image corresponding to right-eye image data on the light receiving face with respect to the subject, right-eye image data will be produced by the controller such that the top and bottom and the left and right of a right-eye image reproduced from right-eye image data substantially coincide with the top and bottom and the left and right of the subject. Therefore, the camera body using this program can be compatible with various kinds of interchangeable lens unit.

A computer-readable storage medium according to a twenty-second aspect is a storage medium storing a program configured to cause a computer to perform a method for controlling a camera body configured to produce image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

With the program stored in this storage medium is executed in the camera body, when the interchangeable lens unit mounted to the body mount is configured to mirror-invert a right-eye optical image corresponding to right-eye image data on the light receiving face with respect to the subject, right-eye image data will be produced by the controller such that the top and bottom and the left and right of a right-eye image reproduced from right-eye image data substantially coincide with the top and bottom and the left and right of the subject. Therefore, the camera body using the program stored in the storage medium can be compatible with various kinds of interchangeable lens unit.

The phrase "the top and bottom and the left and right of a right-eye image reproduced from right-eye image data substantially coincide with the top and bottom and the left and right of the subject" used here encompasses not only a situation in which the top and bottom and the left and right of the right-eye image reproduced from right-eye image data completely coincide with the top and bottom and the left and right of the subject, but also a situation in which the top and bottom and the left and right of the right-eye image reproduced from right-eye image data deviates from the top and bottom and the left and right of the subject within the extent that it is still possible to obtain the effect of being compatible with various kinds of interchangeable lens unit.

The phrase "a right-eye image reproduced from right-eye image data" used here means, for example, the right-eye image displayed on the display unit included in a camera body or on the display device provided aside from the camera body. For example, it can be determined whether the top and bottom and the left and right of the right-eye image reproduced from right-eye image data substantially coincide with the top and bottom and the left and right of the subject, on the basis of a state in which a longitudinal direction of the display of the display unit or device coincides with a horizontal direction.

A method according to a twenty-third aspect is a method for controlling a camera body configured to produce left-eye image data and right-eye image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

With this method, the controller restricts execution of three-dimensional imaging mode at least until an operation by the user, when an interchangeable lens unit that is not compatible with three-dimensional imaging has been mounted to the body mount. Therefore, the camera body using this method can be compatible with various kinds of interchangeable lens unit.

A program according to a twenty-fourth aspect is a program configured to cause a computer to perform a method for controlling a camera body configured to produce image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

When this program is executed in the camera body, the controller restricts execution of three-dimensional imaging mode at least until an operation by the user, when an interchangeable lens unit that is not compatible with three-dimensional imaging has been mounted to the body mount. Therefore, the camera body using this program can be compatible with various kinds of interchangeable lens unit.

A computer-readable storage medium according to a twenty-fifth aspect is a storage medium storing a program configured to cause a computer to perform a method for controlling a camera body configured to produce image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

When the program stored in the storage medium is executed in the camera body, the controller restricts execution of three-dimensional imaging mode at least until an operation by the user, when an interchangeable lens unit that is not compatible with three-dimensional imaging has been mounted to the body mount. Therefore, the camera body using this method can be compatible with various kinds of interchangeable lens unit.

A method according to a twenty-sixth aspect is a method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.

With this method, the state information production section produces restrictive information used for restricting the photographing of the camera body when the lens-side determination section has determined that the camera body is not compatible with three-dimensional imaging. Therefore, this prevents the accidental use of a three-dimensional optical system to perform two-dimensional imaging with the camera body. That is, the interchangeable lens unit using this method can be compatible with various kinds of camera body, such as camera bodies that are and are not compatible with three-dimensional imaging.

A program according to a twenty-seventh aspect is a program configured to cause a computer to perform a method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.

When this program is executed in the interchangeable lens, the state information production section produces restrictive information used for restricting the photographing of the camera body when the lens-side determination section has determined that the camera body is not compatible with three-dimensional imaging. Therefore, this prevents the accidental use of a three-dimensional optical system to perform two-dimensional imaging with the camera body. That is, the interchangeable lens unit using this program can be compatible with various kinds of camera body, such as camera bodies that are and are not compatible with three-dimensional imaging.

A computer-readable storage medium according to a twenty-eighth aspect is a storage medium storing a program configured to cause a computer to perform a method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.

When the program stored in this storage medium is executed in the interchangeable lens, the state information production section produces restrictive information used for restricting the photographing of the camera body when the lens-side determination section has determined that the camera body is not compatible with three-dimensional imaging. Therefore, this prevents the accidental use of a three-dimensional optical system to perform two-dimensional imaging with the camera body. That is, the interchangeable lens unit using the program stored in this storage medium can be compatible with various kinds of camera body, such as camera bodies that are and are not compatible with three-dimensional imaging.

### BRIEF DESCRIPTION OF DRAWINGS

Fig. 1 is an oblique view of a digital camera 1;

Fig. 2 is an oblique view of a camera body 100;

Fig. 3 is a rear view of a camera body 100;

Fig. 4 is a simplified block diagram of a digital camera 1;

Fig. 5 is a simplified block diagram of an interchangeable lens unit 200;

Fig. 6 is a simplified block diagram of a camera body 100;

Fig. 7A is an example of the configuration of lens identification information F1, Fig. 7B is an example of the configuration of lens identification information F2, and Fig. 7C is an example of the configuration of lens identification information F3;

Fig. 8A is a time chart for a camera body and an interchangeable lens unit when the camera body is not compatible with three-dimensional imaging, and Fig. 8B is a time chart for a camera body and an interchangeable lens unit when the camera body and interchangeable lens unit are compatible with three-dimensional imaging;

Fig. 9 is a diagram illustrating various parameters;

Fig. 10 is a diagram illustrating an angle of convergence;

Fig. 11A is a diagram illustrating a measurement test during shipping, Fig. 11B shows a left-eye image obtained in a measurement test, and Fig. 11C shows a right-eye image obtained in a measurement test (interchangeable lens unit);

Fig. 12A is a diagram illustrating a measurement test during shipping, Fig. 12B shows a left-eye image obtained in a measurement test, and Fig. 12C shows a right-eye image obtained in a measurement test (camera body);

Fig. 13 is a table of patterns of 180-degree rotation flags, layout change flags, and mirror inversion flags;

Fig. 14A is a simplified diagram of an interchangeable lens unit 200, Fig. 14B is a diagram of a subject as viewed from the imaging location, and Fig. 14C is an optical image on an imaging element as viewed from the rear face side of the camera;

Fig. 15A is a simplified diagram of an interchangeable lens unit 300, Fig. 15B is a diagram of a subject as viewed from the imaging location, and Fig. 15C is an optical image on an imaging element as viewed from the rear face side of the camera;

Fig. 16A is a simplified diagram of an adapter 400 and an interchangeable lens unit 600, Fig. 16B is a diagram of a subject as viewed from the imaging location, Fig. 16C is primary imaging (a floating image on an imaginary plane) as viewed from the rear face side of the camera, and Fig. 16D is secondary imaging on an imaging element as viewed from the rear face side of the camera;

Fig. 17A is a simplified diagram of an interchangeable lens unit 300, Fig. 17B is a diagram of a subject as viewed from the imaging location, and Fig. 17C is an optical image on an imaging element as viewed from the rear face side of the camera;

Fig. 18 is a table of various flags and patterns;

Fig. 19 is a table of various flags and patterns;

Fig. 20 is a flowchart of when the power is on;

Fig. 21 is a flowchart of when the power is on;

Fig. 22 is a flowchart of during imaging.

### DESCRIPTION OF EMBODIMENTS

Configuration of Digital Camera

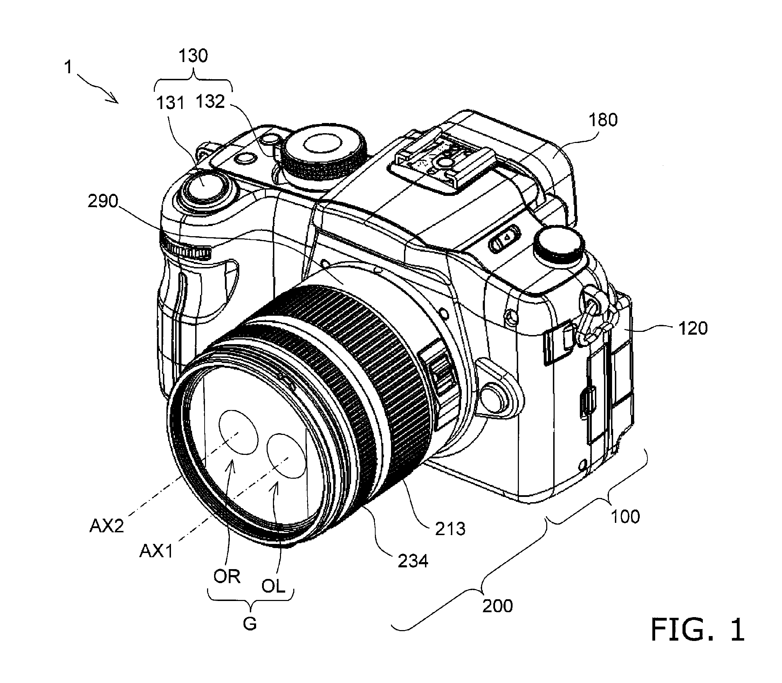

A digital camera 1 is an imaging device capable of three-dimensional imaging, and is an interchangeable lens type of digital camera. As shown in Figs. 1 to 3, the digital camera 1 comprises an interchangeable lens unit 200 and a camera body 100 to which the interchangeable lens unit 200 can be mounted. The interchangeable lens unit 200 is a lens unit that is compatible with three-dimensional imaging, and forms optical images of a subject (a left-eye optical image and a right-eye optical image). The camera body 100 is compatible with both two- and three-dimensional imaging, and produces image data on the basis of the optical image formed by the interchangeable lens unit 200. In addition to the interchangeable lens unit 200 that is compatible with three-dimensional imaging, an interchangeable lens unit that is not compatible with three-dimensional imaging can also be attached to the camera body 100. That is, the camera body 100 is compatible with both two- and three-dimensional imaging.

For the sake of convenience in the following description, the subject side of the digital camera 1 will be referred to as "front," the opposite side from the subject as "back" or "rear," the vertical upper side in the normal orientation (landscape orientation) of the digital camera 1 as "upper," and the vertical lower side as "lower."

1: Interchangeable Lens Unit

The interchangeable lens unit 200 is a lens unit that is compatible with three-dimensional imaging. The interchangeable lens unit 200 in this embodiment makes use of a side-by-side imaging system with which two optical images are formed on a single imaging element by a pair of left and right optical systems.

As shown in Figs. 1 to 4, the interchangeable lens unit 200 has a three-dimensional optical system G, a first drive unit 271, a second drive unit 272, a shake amount detecting sensor 275, and a lens controller 240. The interchangeable lens unit 200 further has a lens mount 250, a lens barrel 290, a zoom ring 213, and a focus ring 234. In the mounting of the interchangeable lens unit 200 to the camera body 100, the lens mount 250 is attached to a body mount 150 (discussed below) of the camera body 100. As shown in Fig. 1, the zoom ring 213 and the focus ring 234 are rotatably provided to the outer part of the lens barrel 290.

(1) Three-Dimensional Optical System G

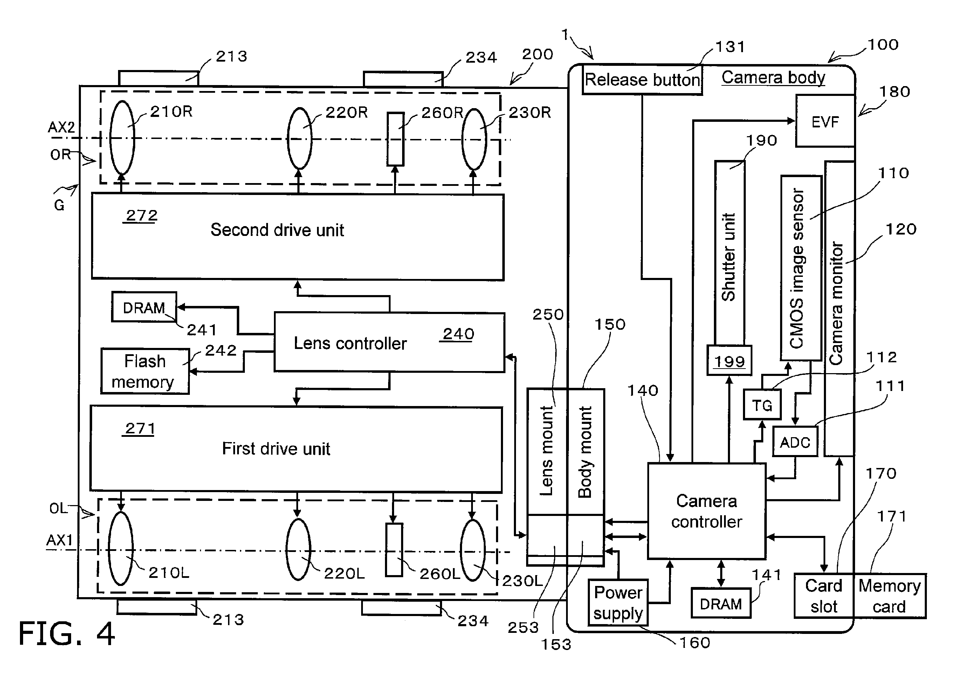

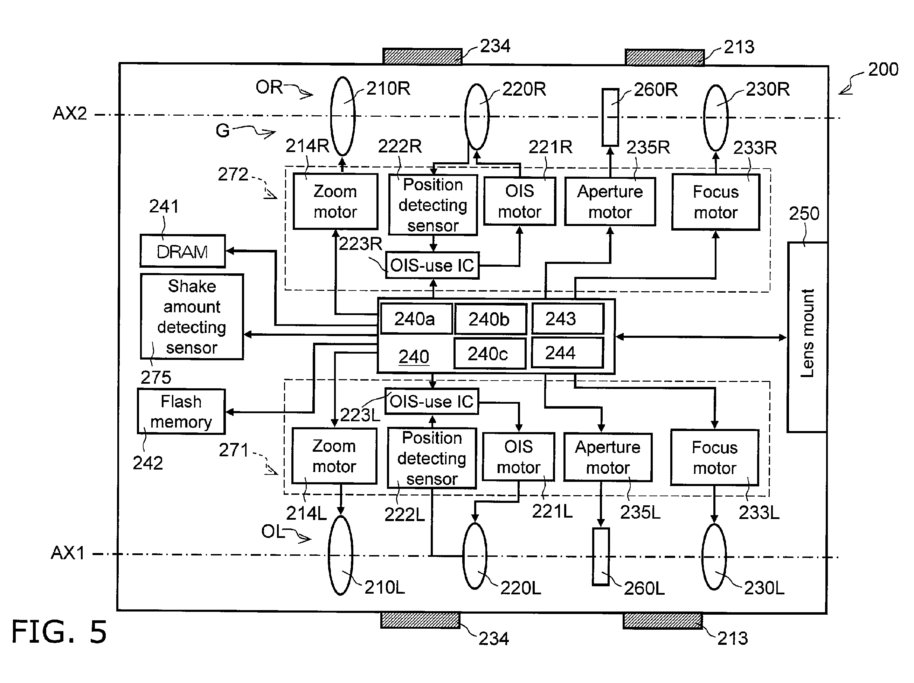

As shown in Figs. 4 and 5, the three-dimensional optical system G is an optical system compatible with side-by-side imaging, and has a left-eye optical system OL and a right-eye optical system OR. The left-eye optical system OL and the right-eye optical system OR are disposed to the left and right of each other. Here, "left-eye optical system" refers to an optical system corresponding to a left-side perspective, and more specifically refers to an optical system in which the optical element disposed closest to the subject (the front side) is disposed on the left side facing the subject. Similarly, a "right-eye optical system" refers to an optical system corresponding to a right-side perspective, and more specifically refers to an optical system in which the optical element disposed closest to the subj ect (the front side) is disposed on the right side facing the subj ect.

The left-eye optical system OL is an optical system used to capture an image of a subject from a left-side perspective facing the subject, and includes a zoom lens 210L, an OIS lens 220L, an aperture unit 260L, and a focus lens 230L. The left-eye optical system OL has a first optical axis AX1, and is housed inside the lens barrel 290 in a state of being side by side with the right-eye optical system OR.

The zoom lens 210L is used to change the focal length of the left-eye optical system OL, and is disposed movably in a direction parallel with the first optical axis AX1. The zoom lens 210L is made up of one or more lenses. The zoom lens 210L is driven by a zoom motor 214L (discussed below) of the first drive unit 271. The focal length of the left-eye optical system OL can be adjusted by driving the zoom lens 210L in a direction parallel with the first optical axis AX1.

The OIS lens 220L is used to suppress displacement of the optical image formed by the left-eye optical system OL with respect to a CMOS image sensor 110 (discussed below). The OIS lens 220L is made up of one or more lenses. An OIS motor 221L drives the OIS lens 220L on the basis of a control signal sent from an OIS-use IC 223L so that the OIS lens 220L moves within a plane perpendicular to the first optical axis AX1. The OIS motor 221L can be, for example, a magnet (not shown) and a flat coil (not shown). The position of the OIS lens 220L is detected by a position detecting sensor 222L (discussed below) of the first drive unit 271.

An optical system is employed as the blur correction system in this embodiment, but the blur correction system may instead be an electronic system in which image data produced by the CMOS image sensor 110 is subjected to correction processing, or a sensor shift system in which an imaging element such as the CMOS image sensor 110 is driven within a plane that is perpendicular to the first optical axis AX1.

The aperture unit 260L adjusts the amount of light that passes through the left-eye optical system OL. The aperture unit 260L has a plurality of aperture vanes (not shown). The aperture vanes are driven by an aperture motor 235L (discussed below) of the first drive unit 271. A camera controller 140 (discussed below) controls the aperture motor 235L.

The focus lens 230L is used to adjust the subject distance (also called the object distance) of the left-eye optical system OL, and is disposed movably in a direction parallel to the first optical axis AX1. The focus lens 230L is driven by a focus motor 233L (discussed below) of the first drive unit 271. The focus lens 230L is made up of one or more lenses.

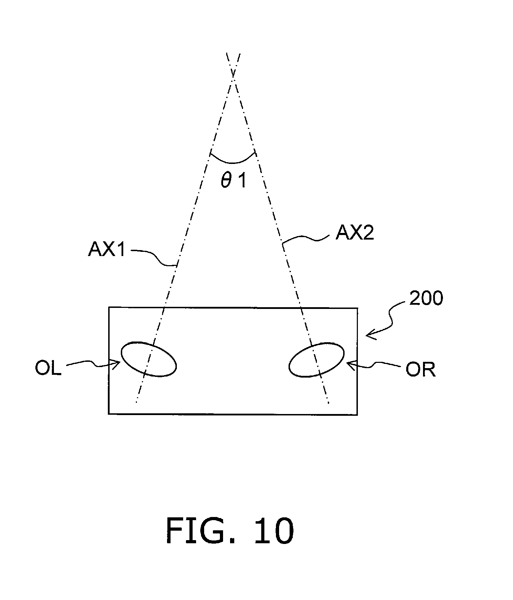

The right-eye optical system OR is an optical system used to capture an image of a subject from a right-side perspective facing the subject, and includes a zoom lens 210R, an OIS lens 220R, an aperture unit 260R, and a focus lens 230R. The right-eye optical system OR has a second optical axis AX2, and is housed inside the lens barrel 290 in a state of being side by side with the left-eye optical system OL. The specification of the right-eye optical system OR is the same as that of the left-eye optical system OL. The angle formed by the first optical axis AX1 and the second optical axis AX2 (angle of convergence) is referred to as the angle θ1 shown in Fig. 10.

The zoom lens 210R is used to change the focal length of the right-eye optical system OR, and is disposed movably in a direction parallel with the second optical axis AX2. The zoom lens 210R is made up of one or more lenses. The zoom lens 210R is driven by a zoom motor 214R (discussed below) of the second drive unit 272. The focal length of the right-eye optical system OR can be adjusted by driving the zoom lens 210R in a direction parallel with the second optical axis AX2. The drive of the zoom lens 210R is synchronized with the drive of the zoom lens 210L. Therefore, the focal length of the right-eye optical system OR is the same as the focal length of the left-eye optical system OL.

The OIS lens 220R is used to suppress displacement of the optical image formed by the right-eye optical system OR with respect to the CMOS image sensor 110. The OIS lens 220R is made up of one or more lenses. An OIS motor 221R drives the OIS lens 220R on the basis of a control signal sent from an OIS-use IC 223R so that the OIS lens 220R moves within a plane perpendicular to the second optical axis AX2. The OIS motor 221R can be, for example, a magnet (not shown) and a flat coil (not shown). The position of the OIS lens 220R is detected by a position detecting sensor 222R (discussed below) of the second drive unit 272.

An optical system is employed as the blur correction system in this embodiment, but the blur correction system may instead be an electronic system in which image data produced by the CMOS image sensor 110 is subjected to correction processing, or a sensor shift system in which an imaging element such as the CMOS image sensor 110 is driven within a plane that is perpendicular to the second optical axis AX2.

The aperture unit 260R adjusts the amount of light that passes through the right-eye optical system OR. The aperture unit 260R has a plurality of aperture vanes (not shown). The aperture vanes are driven by an aperture motor 235R (discussed below) of the second drive unit 272. The camera controller 140 controls the aperture motor 235R. The drive of the aperture unit 260R is synchronized with the drive of the aperture unit 260L. Therefore, the aperture value of the right-eye optical system OR is the same as the aperture value of the left-eye optical system OL.

The focus lens 230R is used to adjust the subject distance (also called the object distance) of the right-eye optical system OR, and is disposed movably in a direction parallel to the second optical axis AX2. The focus lens 230R is driven by a focus motor 233R (discussed below) of the second drive unit 272. The focus lens 230R is made up of one or more lenses.

(2) First Drive Unit 271

The first drive unit 271 is provided to adjust the state of the left-eye optical system OL, and as shown in Fig. 5, has the zoom motor 214L, the OIS motor 221L, the position detecting sensor 222L, the OIS-use IC 223L, the aperture motor 235L, and the focus motor 233L.

The zoom motor 214L drives the zoom lens 210L. The zoom motor 214L is controlled by the lens controller 240.

The OIS motor 221L drives the OIS lens 220L. The position detecting sensor 222L is a sensor for detecting the position of the OIS lens 220L. The position detecting sensor 222L is a Hall element, for example, and is disposed near the magnet of the OIS motor 221L. The OIS-use IC 223L controls the OIS motor 221L on the basis of the detection result of the position detecting sensor 222L and the detection result of the shake amount detecting sensor 275. The OIS-use IC 223L acquires the detection result of the shake amount detecting sensor 275 from the lens controller 240. Also, the OIS-use IC 223L sends the lens controller 240 a signal indicating the position of the OIS lens 220L, at a specific period.

The aperture motor 235L drives the aperture unit 260L. The aperture motor 235L is controlled by the lens controller 240.

The focus motor 233L drives the focus lens 230L. The focus motor 233L is controlled by the lens controller 240. The lens controller 240 also controls the focus motor 233R, and synchronizes the focus motor 233L and the focus motor 233R. Consequently, the subject distance of the left-eye optical system OL is the same as the subject distance of the right-eye optical system OR. Examples of the focus motor 233L include a DC motor, a stepping motor, a servo motor, and an ultrasonic motor.

(3) Second Drive Unit 272

The second drive unit 272 is provided to adjust the state of the right-eye optical system OR, and as shown in Fig. 5, has the zoom motor 214R, the OIS motor 221R, the position detecting sensor 222R, the OIS-use IC 223R, the aperture motor 235R, and the focus motor 233R.

The zoom motor 214R drives the zoom lens 210R. The zoom motor 214R is controlled by the lens controller 240.

The OIS motor 221R drives the OIS lens 220R. The position detecting sensor 222R is a sensor for detecting the position of the OIS lens 220R. The position detecting sensor 222R is a Hall element, for example, and is disposed near the magnet of the OIS motor 221R. The OIS-use IC 223R controls the OIS motor 221R on the basis of the detection result of the position detecting sensor 222R and the detection result of the shake amount detecting sensor 275. The OIS-use IC 223R acquires the detection result of the shake amount detecting sensor 275 from the lens controller 240. Also, the OIS-use IC 223R sends the lens controller 240 a signal indicating the position of the OIS lens 220R, at a specific period.

The aperture motor 235R drives the aperture unit 260R. The aperture motor 235R is controlled by the lens controller 240.

The focus motor 233R drives the focus lens 230R. The focus motor 233R is controlled by the lens controller 240. The lens controller 240 synchronizes the focus motor 233L and the focus motor 233R. Consequently, the subject distance of the left-eye optical system OL is the same as the subject distance of the right-eye optical system OR. Examples of the focus motor 233R include a DC motor, a stepping motor, a servo motor, and an ultrasonic motor.

(4) Lens Controller 240

The lens controller 240 controls the various components of the interchangeable lens unit 200 (such as the first drive unit 271 and the second drive unit 272) on the basis of control signals sent from the camera controller 140. The lens controller 240 sends and receives signals to and from the camera controller 140 via the lens mount 250 and the body mount 150. During control, the lens controller 240 uses a DRAM 241 as a working memory.

The lens controller 240 has a CPU (central processing unit) 240a, a ROM (read only memory) 240b, and a RAM (random access memory) 240c, and can perform various functions by reading programs stored in the ROM 240b (an example of a computer-readable storage medium) into the CPU 240a.

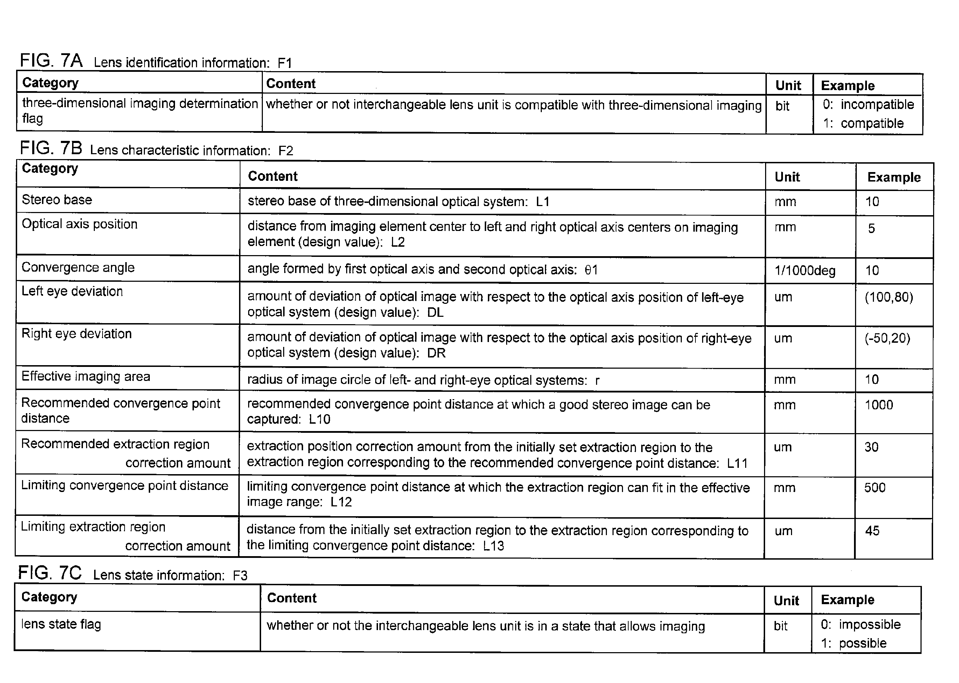

Also, a flash memory 242 (an example of an identification information storage section) stores parameters or programs used in control by the lens controller 240. For example, in the flash memory 242 are pre-stored lens identification information F1 (see Fig. 7A) indicating that the interchangeable lens unit 200 is compatible with three-dimensional imaging, and lens characteristic information F2 (see Fig. 7B) that includes flags and parameters indicating the characteristics of the three-dimensional optical system G. Lens state information F3 (see Fig. 7C) indicating whether or not the interchangeable lens unit 200 is in a state that allows imaging is held in the RAM 240c, for example.

The lens identification information F1, lens characteristic information F2, and lens state information F3 will now be described.

Lens Identification Information F1

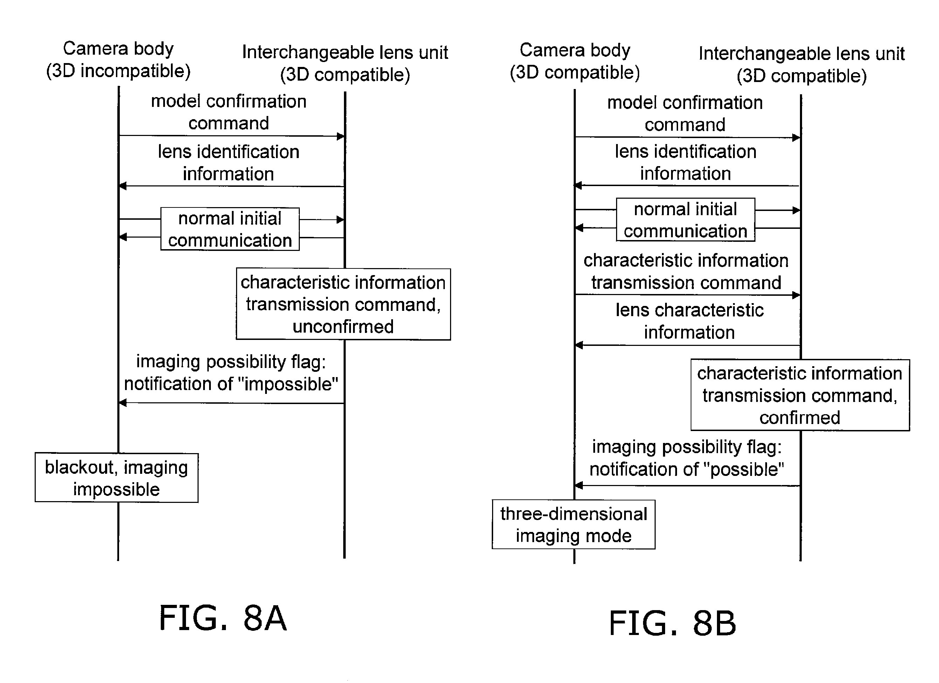

The lens identification information F1 is information indicating whether or not the interchangeable lens unit is compatible with three-dimensional imaging, and is stored ahead of time in the flash memory 242, for example. As shown in Fig. 7A, the lens identification information F1 is a three-dimensional imaging determination flag stored at a specific address in the flash memory 242. As shown in Figs. 8A and 8B, a three-dimensional imaging determination flag is sent from the interchangeable lens unit to the camera body in the initial communication performed between the camera body and the interchangeable lens unit when the power is turned on or when the interchangeable lens unit is mounted to the camera body.

If a three-dimensional imaging determination flag has been raised, that interchangeable lens unit is compatible with three-dimensional imaging, but if a three-dimensional imaging determination flag has not been raised, that interchangeable lens unit is not compatible with three-dimensional imaging. A region not used for an ordinary interchangeable lens unit that is not compatible with three-dimensional imaging is used for the address of the three-dimensional imaging determination flag. Consequently, with an interchangeable lens unit that is not compatible with three-dimensional imaging, a state may result in which a three-dimensional imaging determination flag is not raised even though no setting of a three-dimensional imaging determination flag has been performed.

Lens Characteristic Information F2

The lens characteristic information F2 is data indicating the characteristics of the optical system of the interchangeable lens unit, and includes the following parameters and flags, as shown in Fig. 7B.

(A) Stereo Base

Stereo base L1 of the stereo optical system (G)

(B) Optical Axis Position

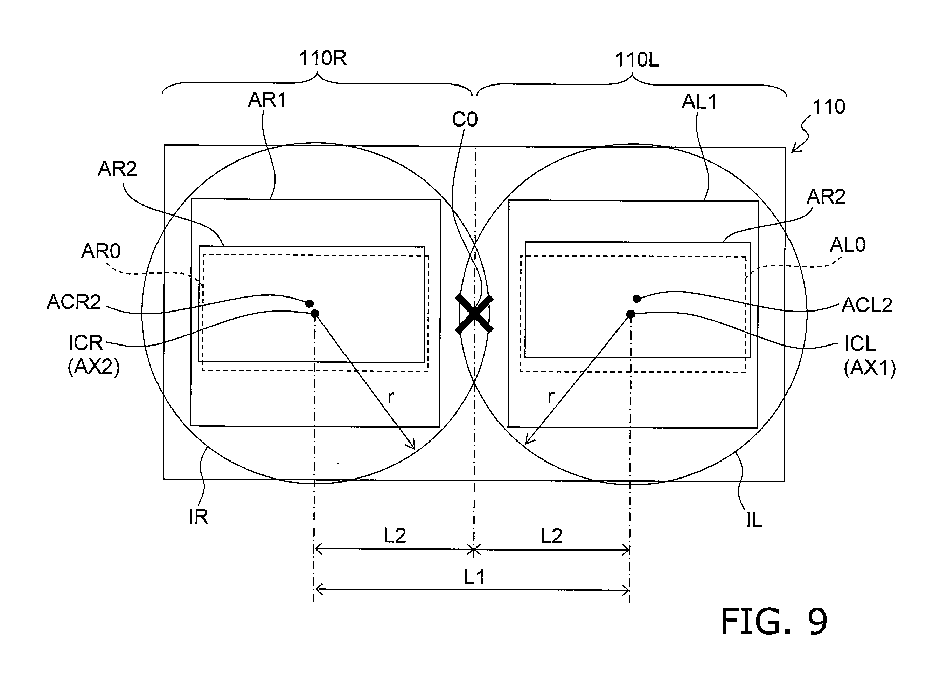

Distance L2 (design value) from the center C0 of the imaging element (the CMOS image sensor 110) to the optical axis center (the center ICR of the image circle IR or the center ICL or the image circle IL shown in Fig. 9)

(C) Angle of Convergence

Angle θ1 formed by the first optical axis (AX1) and the second optical axis (AX2) (see Fig. 10)

(D) Amount of Left-Eye Deviation

Deviation amount DL (horizontal: DLx, vertical: DLy) of the left-eye optical image (QL1) with respect to the optical axis position (design value) of the left-eye optical system (OL) on the imaging element (the CMOS image sensor 110)

(E) Amount of Right-Eye Deviation

Deviation amount DR (horizontal: DRx, vertical: DRy) of the right-eye optical image (QR1) with respect to the optical axis position (design value) of the right-eye optical system (OR) on the imaging element (the CMOS image sensor 110)

(F) Effective Imaging Area

Radius r of the image circles (AL1, AR1) of the left-eye optical system (OL) and the right-eye optical system (OR) (see Fig. 9)

(G) 180-Degree Rotation Flag

Flag indicating whether or not the optical image has rotated 180 degrees on the imaging element (the CMOS image sensor 110)

(H) Layout Change Flag

Flag indicating whether or not the positional relation between the left-eye optical image (QL1) and the right-eye optical image (QR1) on the imaging element (the CMOS image sensor 110) has switched

(I) Mirror Inversion Flag

Flag indicating whether or not the imaging element has undergone mirror inversion on the imaging element (the CMOS image sensor 110)

Of the above parameters, the optical axis position, the left-eye deviation, and the right-eye deviation are parameters characteristic of a side-by-side imaging type of three-dimensional optical system. That is, it can be said that the lens characteristic information F2 includes data with which it is possible to identify whether or not parallel imaging is employed in the interchangeable lens unit 200.

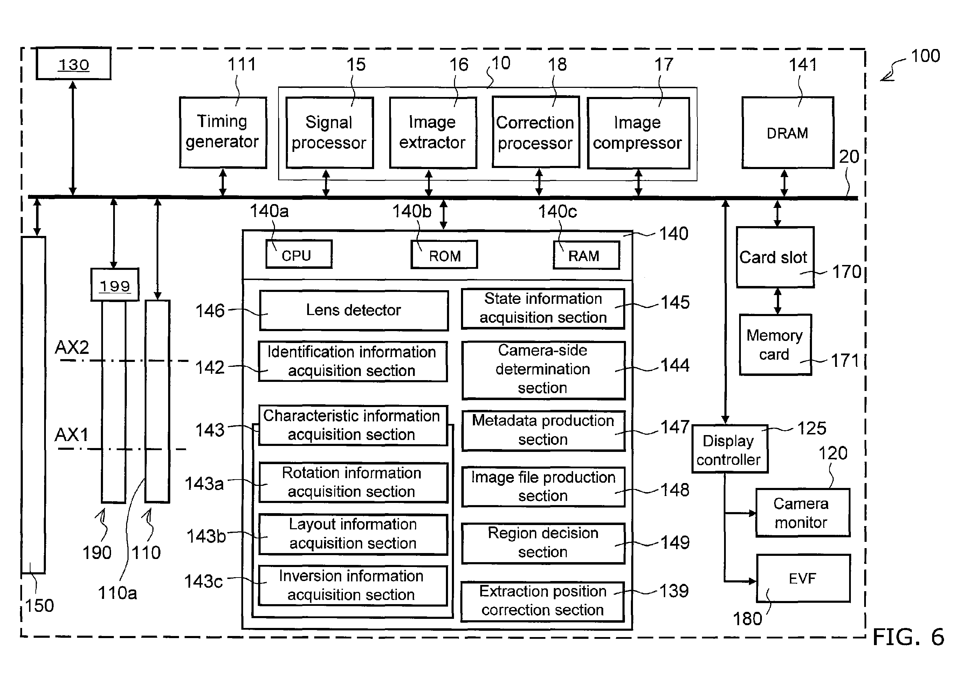

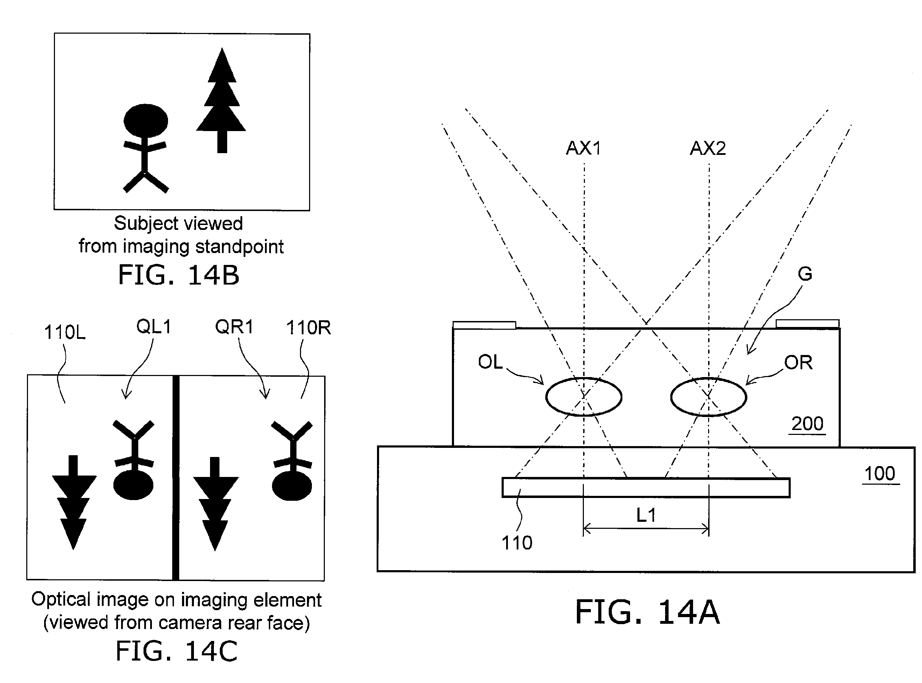

The above parameters will now be described through reference to Figs. 9 to 16. Fig. 9 is a diagram of the CMOS image sensor 110 as viewed from the subject side. The CMOS image sensor 110 has a light receiving face 110a (see Figs. 6 and 9) that receives light that has passed through the interchangeable lens unit 200. An optical image of the subject is formed on the light receiving face 110a. As shown in Fig. 9, the light receiving face 110a has a first region 110L and a second region 110R disposed adjacent to the first region 110L. The surface area of the first region 110L is the same as the surface area of the second region 110R. As shown in Fig. 14C, when viewed from the rear face side of the camera body 100 (a see-through view), the first region 110L accounts for the left half of the light receiving face 110a, and the second region 110R accounts for the right half of the light receiving face 110a. As shown in Fig. 14C, when imaging is performed using the interchangeable lens unit 200, a left-eye optical image QL1 is formed in the first region 110L, and a right-eye optical image QR1 is formed in the second region 110R.

As shown in Fig. 9, the image circle IL of the left-eye optical system OL and the image circle IR of the right-eye optical system OR are defined for design purposes on the CMOS image sensor 110. The center ICL of the image circle IL (an example of a first reference position) coincides with the designed position of the first optical axis AX1 of the left-eye optical system OL, and the center ICR of the image circle IR (an example of a first reference position) coincides with the designed position of the second optical axis AX2 of the right-eye optical system OR. Therefore, the stereo base is the designed distance L1 between the first optical axis AX1 and the second optical axis AX2 on the CMOS image sensor 110. Also, the optical axis position is the designed distance L2 between the center Co of the light receiving face 110a and the first optical axis AX1 (or the designed distance L2 between the center C0 and the second optical axis AX2).

As shown in Fig. 9, an extractable range AL1 is set on the basis of the center ICL, and an extractable range AR1 is set on the basis of the center ICR. Since the center ICL is set substantially at the center position of the first region 110L of the light receiving face 110a, a wider extractable range AL1 can be ensured within the image circle IL. Also, since the center ICR is set substantially at the center position of the second region 110R, a wider extractable range AR1 can be ensured within the image circle IR.

The extractable ranges AL0 and AR0 shown in Fig. 9 are regions serving as a reference in extracting left-eye image data and right-eye image data. The designed extractable range AL0 for left-eye image data is set using the center ICL of the image circle IL (or the first optical axis AX1) as a reference, and is positioned at the center of the extractable range AL1. Also, the designed extractable range AR0 for right-eye image data is set using the center ICR of the image circle IR (or the second optical axis AX2) as a reference, and is positioned at the center of the extractable range AR1.

Actually, however, there are instances in which the positions of the image circles deviate from the designed positions from one interchangeable lens unit to another, due to individual differences in the finished products. In particular, when performing three-dimensional imaging, if the positions of the left-eye optical image QL1 and the right-eye optical image QR1 deviated from each other too much in the up and down direction, the user may not be able to recognize the three-dimensional imaging properly in stereoscopic view.

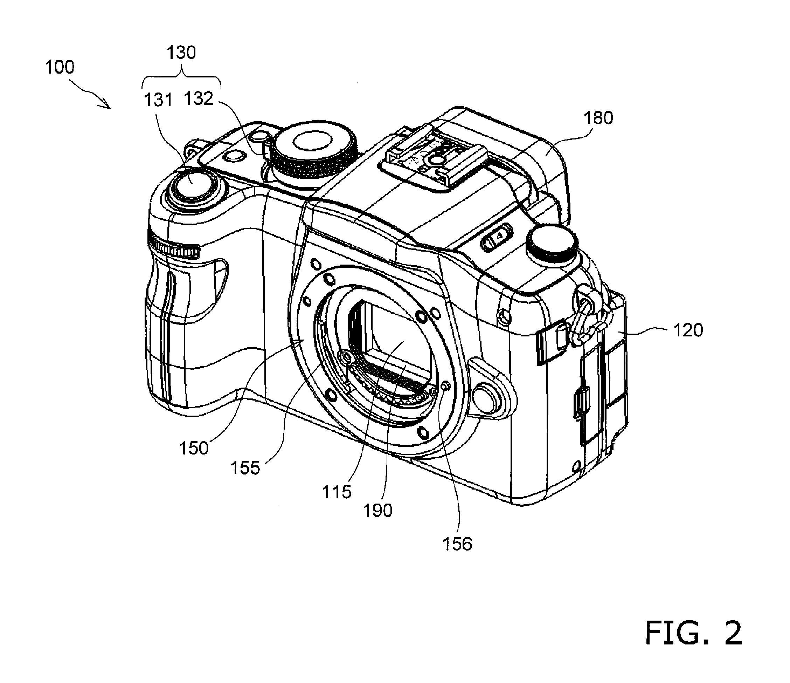

Furthermore, attachment variance between the interchangeable lens unit and the camera body can be caused by individual differences in products. The interchangeable lens unit is usually bayonet linked to the body mount of the camera body, and the rotational position with respect to the camera body is determined by a lock pin. In the case of the digital camera 1, as shown in Fig. 2, a bayonet (not shown) formed on the lens mount 250 is fitted into a bayonet groove 155 formed in the body mount 150, and when the interchangeable lens unit 200 is rotated with respect to the camera body 100, a lock pin 156 fits into a hole (not shown) in the lens mount 250. There is a tiny gap between the lock pin 156 and the hole. If this gap causes the fixed position of the interchangeable lens unit to deviate in the rotational direction with respect to the camera body, the optical image formed on the imaging element will end up rotating. A certain amount of rotation is permissible with two-dimensional imaging, but when three-dimensional imaging is performed, rotation of the optical image may augment the positional offset between the left-eye optical image and the right-eye optical image in the up and down direction, and may affect the stereoscopic view.

As discussed above, when three-dimensional imaging is performed, it is preferable to adjust the positions of the actual extraction regions AL2 and AR2 using the designed positions as a reference, according to individual differences in products.

In view of this, the left-eye deviation amount DL, the right-eye deviation amount DR, and the inclination angle θ2 are measured for each product before shipping in order to adjust the positions of the extraction regions AL2 and AR2. The method for measuring the left-eye deviation amount DL, the right-eye deviation amount DR, and the inclination angle θ2 will be described below.

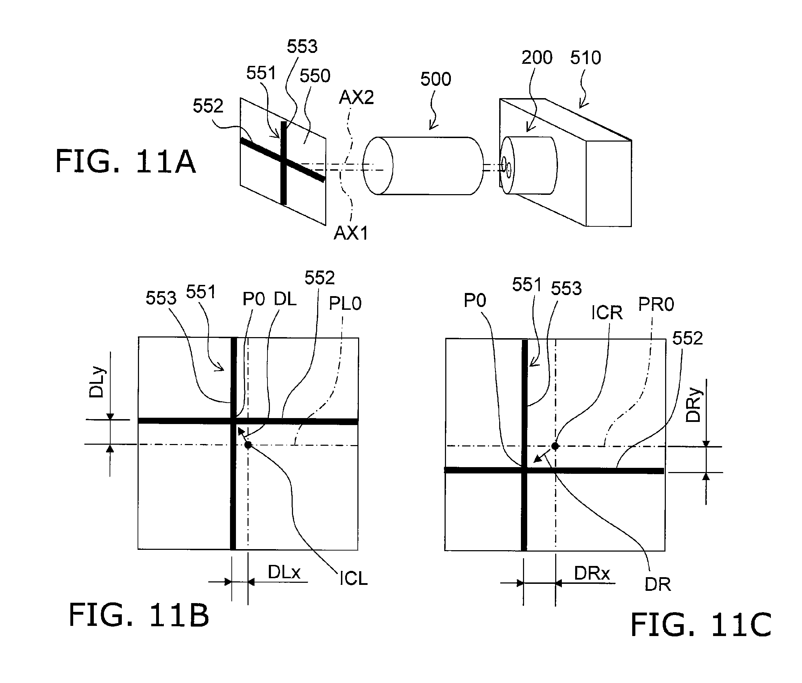

First of all, the left-eye deviation amount DL and the right-eye deviation amount DR are caused by individual differences between interchangeable lens units. Therefore, the left-eye deviation amount DL and the right-eye deviation amount DR are measured for every interchangeable lens unit. For example, as shown in Fig. 11A, a chart 550 and a measurement-use camera body 510 are used to measure the left-eye deviation amount DL and the right-eye deviation amount DR. A cross 551 is drawn on the chart 550. The camera body 510 is fixed to a fixing stand (not shown). The position of the camera body 510 with respect to the chart 550 is adjusted ahead of time using a three-dimensional imaging-use interchangeable lens unit that serves as a reference. More specifically, the reference interchangeable lens unit is mounted to the camera body 510, and a collimator lens 500 is disposed between the interchangeable lens unit and the chart 550. When imaging is performed in this state, a left-eye optical image and a right-eye optical image with a picture of the chart 550 are obtained. The position of the camera body 510 is adjusted so that within these images the horizontal line 552 and the vertical line 553 of the cross 551 are parallel to the long and short sides of the images, and the center P0 of the cross 551 coincides with the center ICL of the image circle IL and the center ICR of the image circle IR. The position-adjusted camera body 510 can be used to measure the left-eye deviation amount DL and the right-eye deviation amount DR caused by individual differences in interchangeable lens units, on the basis of the chart 550 within the images. The positions of the cross 551 in the left-eye image and the right-eye image captured here serve as reference lines PL0 and PR0.

For instance, when the interchangeable lens unit 200 is mounted to the camera body 510 and imaging is performed, the left-eye image and the right-eye image shown in Figs. 11B and 11C are obtained. The chart 550 in left-eye image and the right-eye image deviates from the reference lines PL0 and PRO due to dimensional variance and so forth in the components of the interchangeable lens unit 200. In some cases, the position of the cross 551 in the left-eye image will be different from the position of the cross 551 in the right-eye image. The left-eye deviation amount DL (horizontal: DLx, vertical: DLy) and the right-eye deviation amount DR (horizontal: DRx, vertical: DRy) are calculated from these two test images. The left-eye deviation amount DL and the right-eye deviation amount DR are calculated using the center P0 of the cross 551, the center ICL of the reference line PL0, and the center ICR of the reference line PRO as references. The left-eye deviation amount DL and the right-eye deviation amount DR are stored in the flash memory 242 of the interchangeable lens unit 200 as the lens characteristic information F2, and then the interchangeable lens unit 200 is shipped as a finished product. These data can be used to adjust the positions of the extraction regions AL2 and AR2 according to the individual differences between interchangeable lens units.

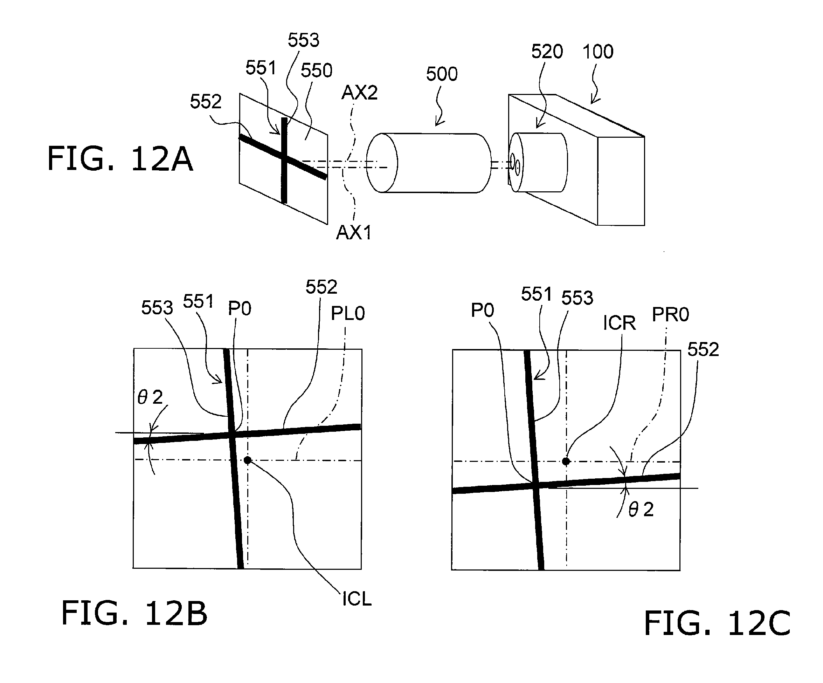

Meanwhile, the inclination angle θ2 is caused by individual differences in camera bodies. Therefore, the inclination angle θ2 is measured for every camera body. For example, as shown in Fig. 12A, the inclination angle θ2 is measured using the chart 550 and a measurement-use interchangeable lens unit 520. The interchangeable lens unit 520 is to a fixing stand (not shown). The position of the interchangeable lens unit 520 with respect to the chart 550 is adjusted ahead of time using a three-dimensional imaging-use camera body that serves as a reference. More specifically, the reference camera body is mounted to the interchangeable lens unit 520. The collimator lens 500 is disposed between the interchangeable lens unit 520 and the chart 550. When imaging is performed in this state, a left-eye optical image and a right-eye optical image with a picture of the chart 550 are obtained. The position of the interchangeable lens unit 520 is adjusted so that within these images the horizontal line 552 and the vertical line 553 of the cross 551 are parallel to the long and short sides of the images, and the center P0 of the cross 551 coincides with the center ICL of the image circle IL and the center ICR of the image circle IR. The position-adjusted interchangeable lens unit 520 can be used to measure the inclination angle θ2 caused by individual differences in camera bodies, on the basis of the chart 550 within the images.

For instance, when the camera body 100 is mounted to the interchangeable lens unit 520 and imaging is performed, the left-eye image and the right-eye image shown in Figs. 12B and 12C are obtained. The chart 550 in left-eye image and the right-eye image deviates from the reference lines PL0 and PRO due to dimensional variance and so forth in the components of the camera body 100 and to attachment error with the interchangeable lens unit 520, and the chart 550 is inclined with respect to the reference lines PL0 and PR0. The inclination angle θ2 is calculated from these two test images. The inclination angle θ2 is calculated using the horizontal line 552 as a reference, for example. The inclination angle θ2 is stored in the ROM 240b of the camera controller 140, and the camera body 100 is then shipped as a finished product. These data can be used to adjust the positions of the extraction regions AL2 and AR2 according to the individual differences between camera bodies.

The lens characteristic information F2 further includes 180-degree rotation flags, layout change flags, and mirror inversion flags. These flags will be described below.

When the subject shown in Fig. 14A is imaged, as shown in Figs. 14B and 14C, the left-eye optical image QL1 formed by the left-eye optical system OL is formed in the first region 110L, and the right-eye optical image QR1 formed by the right-eye optical system OR is formed in the second region 110R. When viewed from the rear face side of the camera body 100, the left-eye optical image QL1 and the right-eye optical image QR1 are rotated by 180 degrees as compared to the subject. This is basically the same as an ordinary optical system used for two-dimensional imaging.

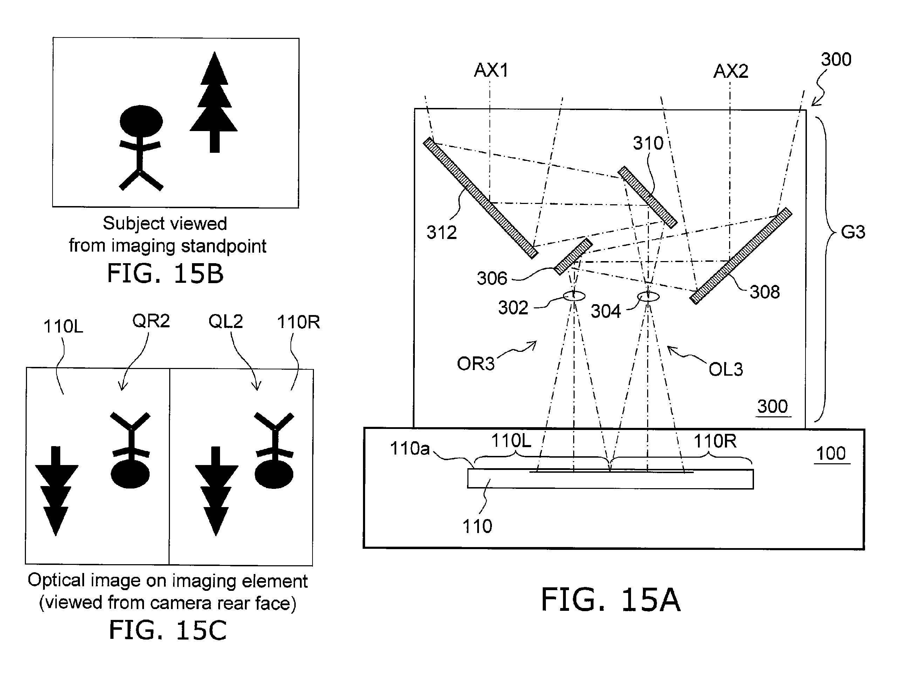

Meanwhile, the three-dimensional optical system G3 of the interchangeable lens unit 300 shown in Fig. 15A has a left-eye optical system OL3 and a right-eye optical system OR3. The left-eye optical system OL3 has a first left-eye mirror 312, a second left-eye mirror 310, and an optical system 304. The right-eye optical system OR3 has a first right-eye mirror 308, a second right-eye mirror 306, and the optical system optical system 304. The right half of the incident light facing the subject is guided by the first left-eye mirror 312, the second left-eye mirror 310, and the optical system 304 to the second region 110R. Meanwhile, the left half of the incident light facing the subject is guided by the first right-eye mirror 308, the second right-eye mirror 306, and the optical system 302 to the first region 110L. That is, just as with the three-dimensional optical system G, when the subject shown in Fig. 15B is imaged, as shown in Fig. 15C, a left-eye optical image QL3 is formed in the second region 110R, and a right-eye optical image QR3 is formed in the first region 110L. Therefore, the three-dimensional optical system G3 is the same as the three-dimensional optical system G of the interchangeable lens unit 200 in that the optical image is rotated by 180 degrees, but different in that the layout of the left-eye optical image and the right-eye optical image is switched around. When this interchangeable lens unit 300 is mounted to the camera body 100, if the same processing as with the interchangeable lens unit 200 is performed by the camera body 100, the layout of the left-eye image (the image reproduced by left-eye image data) is undesirably switched with that of the right-eye image (the image reproduced by right-eye image data) in the stereo image (the image reproduced by stereo image data).

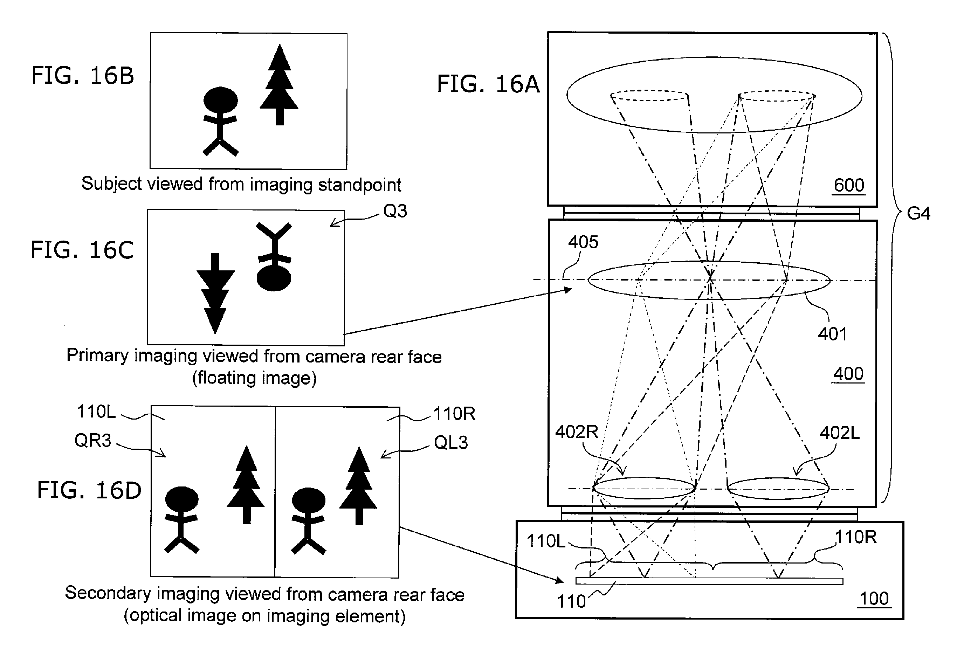

Furthermore, as shown in Fig. 16A, there may be a situation in which an adapter 400 is inserted between an ordinary interchangeable lens unit 600 used for two-dimensional imaging and the camera body 100. The adapter 400 has optical systems 401, 402L, and 402R. The optical system 402L is disposed on the front side of the second region 110R of the CMOS image sensor 110. The optical system 402R is disposed on the front side of the first region 110L. Light that is incident on the interchangeable lens unit 600 from the left half facing the subject is guided by the optical system 401 and the optical system 402L to the second region 110R. Light that is incident on the interchangeable lens unit 600 from the right half facing the subject is guided by the optical system 401 and the optical system 402R to the first region 110L.

In this case, just as with the three-dimensional optical system G, when the subject shown in Fig. 16B is imaged, as shown in Fig. 16C, an optical image Q3 obtained by primary imaging on an imaginary plane 405 including the main points of the optical system 401 is rotated by 180 degrees as compared to the subject. Further, as shown in Fig. 16D, the left-eye optical image QL3 is formed in the second region 110R on the light receiving face 110a, and the right-eye optical image QR3 is formed in the first region 110L. Therefore, as compared to the three-dimensional optical system G of the interchangeable lens unit 200, one difference is that the optical image is not rotated, and another difference is that the layout of the left-eye optical image and the right-eye optical image is switched around. When this interchangeable lens unit 300 is mounted to the camera body 100, if the same processing as with the interchangeable lens unit 200 is performed by the camera body 100, the left-and-right and up-and-down layout of the left-eye image is undesirably switched with that of the right-eye image in the stereo image.

As shown in Fig. 15A, with the interchangeable lens unit 300, light from the subject is reflected twice so that it will not be inverted, but with an interchangeable lens unit having an optical system with which light from the subject is reflected an odd number of times, the optical image may be inverted on the imaging element. If such an interchangeable lens unit is mounted to the camera body 100 and the same processing as with the interchangeable lens unit 200 is then performed, the image will undergo undesirable mirror inversion.

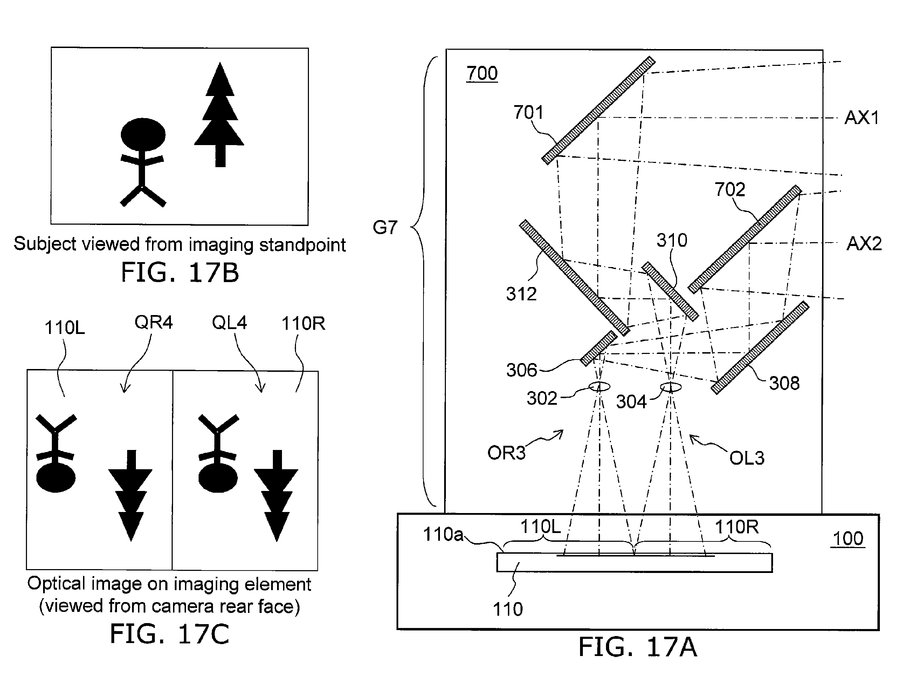

For example, the three-dimensional optical system G3 of the interchangeable lens unit 700 shown in Fig. 17A has a left-eye optical system OL7 and a right-eye optical system OR7. The left-eye optical system OL7 has a front left-eye mirror 701, the first left-eye mirror 312, the second left-eye mirror 310, and the optical system 304. The right-eye optical system OR7 has a front right-eye mirror 702, the first right-eye mirror 308, the second right-eye mirror 306, and the optical system 302. The configurations of the interchangeable lens unit 700 and the three-dimensional optical system G3 differ in the front left-eye mirror 701 and front right-eye mirror 702.

The right half of the incident light facing the subject is guided by the front left-eye mirror 701, the left-eye mirror 312, the second left-eye mirror 310, and the optical system 304 to the second region 110R. Meanwhile, the left half of the incident light facing the subject is guided by the front right-eye mirror 702, the first right-eye mirror 308, the second right-eye mirror 306, and the optical system 302 to the first region 110L. That is, just as with the three-dimensional optical systems G and G3, when the subject shown in Fig. 17B is imaged, as shown in Fig. 17C, a left-eye optical image QL4 is formed in the second region 110R, and a right-eye optical image QR4 is formed in the first region 110L. The optical image as shown in Fig. 15C is further mirror-inverted left and right with the front left-eye mirror 701 and the front right-eye mirror 702. When this interchangeable lens unit 700 is mounted to the camera body 100, if the same processing as with the interchangeable lens unit 200 is performed by the camera body 100, the layout of the left-eye image (the image reproduced by left-eye image data) is undesirably switched with that of the right-eye image (the image reproduced by right-eye image data) in the stereo image (the image reproduced by stereo image data).

In view of this, as shown in Fig. 7B, if 180-degree rotation flags, layout change flags, and mirror inversion flags are included in the lens characteristic information F2, the camera body 100 can change the processing according to the characteristics of the mounted interchangeable lens unit.

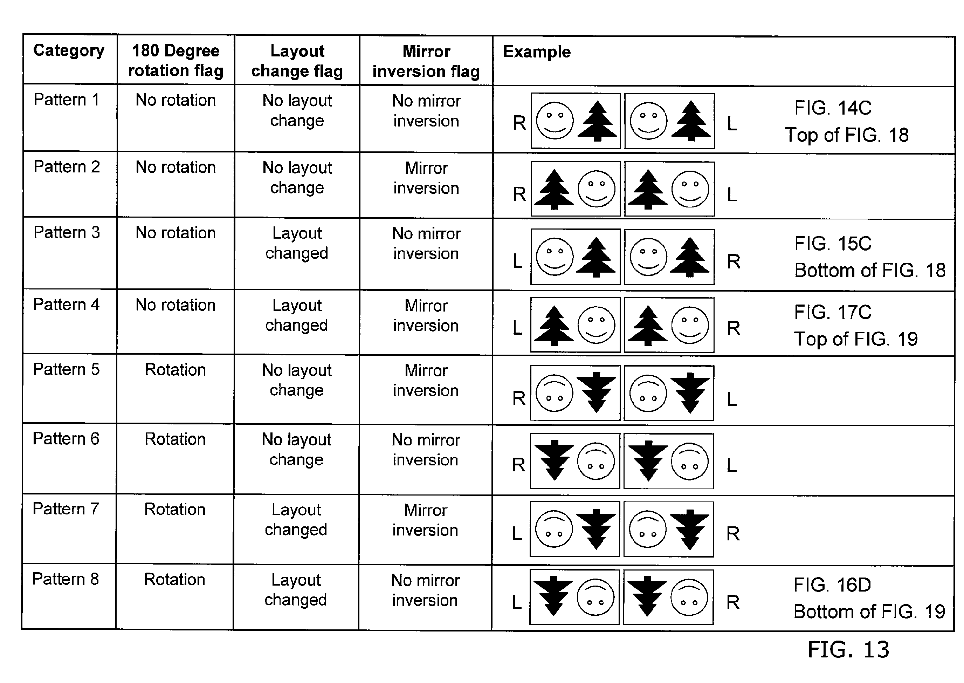

Examples of how these 180-degree rotation flags, layout change flags, and mirror inversion flags can be combined are given by patterns 1 to 8 in Fig. 13.

The criteria for setting these flags will now be described. When an ordinary optical system for two-dimensional imaging is used, the optical image is rotated 180 degrees with respect to the subject. In this case, processing in which the image is rotated by 180 degrees is performed at the point of electrical charge reading or at the point of image processing so that the top and bottom of the displayed image match the top and bottom of the subject. Therefore, in this application, the status of the 180-degree rotation flags, layout change flags, and mirror inversion flags is to be determined by using as a reference an image obtained by rotating by 180 degrees the optical image formed on the imaging element as viewed from the rear face side of the camera. Of course, what kind of image is used as a reference can be selected as desired.

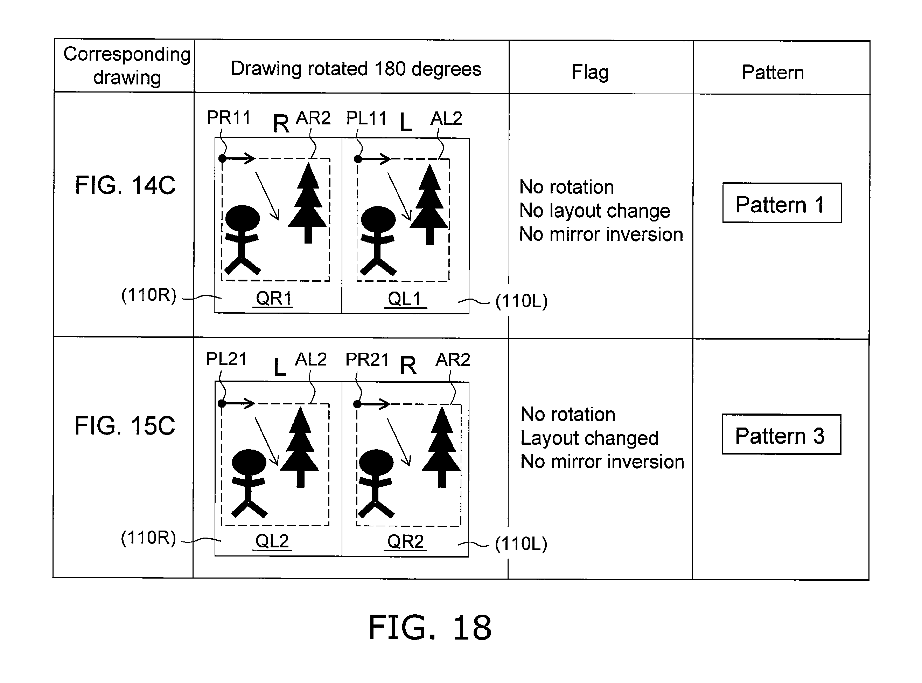

It needs to be confirmed to which of the patterns 1 to 8 shown in Fig. 13 the configuration shown in Figs. 14A, 15A, 16A and 17A corresponds. First, with the interchangeable lens unit 200 shown in Fig. 14A, the picture shown in Fig. 14C is rotated 180 degrees, so a decision can be made from the picture shown at the top in Fig. 18. The result of doing this is that the flags become "no rotation," "no layout change," and "no mirror inversion," and the interchangeable lens unit 200 knows that the optical system corresponds to pattern 1. The first region 110L here is defined as a region for producing left-eye image data, and the second region 110R is defined as a region for producing right-eye image data. Therefore, the decision criterion for the layout change flag is the positional relation between the first region 110L and the second region 110R, rather than the left-and-right layout as seen in the picture shown in Fig. 18. For example, if the left-eye optical image is formed in the second region 110R, the layout change flag will become "layout changed."

In the case of Fig. 15C, a decision can be made from the picture shown in the bottom of Fig. 18, so the flags become "no rotation," "layout changed," and "no mirror inversion," and the interchangeable lens unit 300 knows that the optical system corresponds to pattern 3.

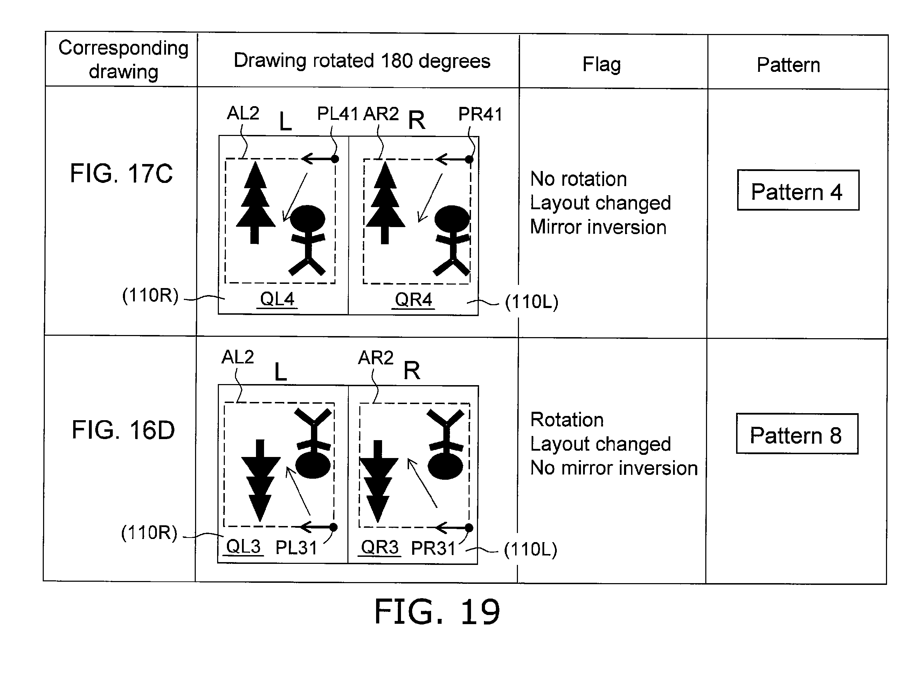

In the case of Fig. 17C, a decision can be made from the picture shown in the top of Fig. 19, so the flags become "no rotation," "layout changed," and "mirror-inverted," and the interchangeable lens unit 700 knows that the optical system corresponds to pattern 4.

In the case of Fig. 16D, a decision can be made from the picture shown at the bottom of Fig. 19, so the flags become "rotated," "layout changed," and "no mirror inversion," and the optical system constituted by the interchangeable lens unit 200 and the adapter 400 knows that the optical system corresponds to pattern 8.

Using the lens characteristic information F2 described above allows left-eye image data and right-eye image data to be properly extracted.

Lens State Information F3

The lens state information F3 is standby information indicating whether or not the interchangeable lens unit 200 is in the proper imaging state, and is stored at a specific address of the RAM 240c as an imaging possibility flag (an example of restrictive information). The phrase "the three-dimensional optical system G is in the proper imaging state" refers to a state in which initialization has been completed for the left-eye optical system OL, the right-eye optical system OR, the first drive unit 271, and the second drive unit 272. The imaging possibility flag is a flag by which the camera body can be recognized even if the camera body is not compatible with three-dimensional imaging. It can be said that the lens state information F3 is the restrictive information used for restricting the imaging of the camera body, since the camera body restricts the imaging when the three-dimensional optical system G is not in the proper imaging state. Possible examples of the restrictive information include error information indicating errors of the interchangeable lens 200, other than the standby information.

Details of Lens Controller 240

The lens controller 240 determines whether or not the camera body is compatible with three-dimensional imaging. More specifically, as shown in Fig. 5, the lens controller 240 has a lens-side determination section 244 and a state information production section 243.

The lens-side determination section 244 determines whether or not the camera body 100 is compatible with three-dimensional imaging. More precisely, the lens-side determination section 244 determines that the camera body is not compatible with three-dimensional imaging when a characteristic information transmission command requesting the transmission of the lens characteristic information F2 is sent from the camera body within a specific time period.

The state information production section 243 sets the status of an imaging possibility flag (an example of restrictive information) indicating that the three-dimensional optical system G is in the proper imaging state, on the basis of the determination result of the lens-side determination section 244 and the state of the interchangeable lens unit 200. Usually, when the initialization of the various components of the interchangeable lens unit 200 is completed, the state information production section 243 sets the imaging possibility flag to "possible." However, as shown in Fig. 7C, for example, if the lens-side determination section 244 has determined the camera body is not compatible with three-dimensional imaging, the state information production section 243 sets the status of the imaging possibility flag to "impossible" regardless of whether or not the initialization of the various components has been completed. On the other hand, if the lens-side determination section 244 has determined that the camera body is compatible with three-dimensional imaging, the state information production section 243 sets the status of the imaging possibility flag to "possible" upon completion of the component initialization. The user can be prevented from performing imaging while thinking that three-dimensional imaging is possible, even though the camera body is not compatible with three-dimensional imaging, by determining that the camera body is not compatible with three-dimensional imaging during the setting of the imaging possibility flag. Of course, the imaging possibility flag can be used to stop the imaging of the camera body under other conditions.

2: Configuration of Camera Body

As shown in Figs. 4 and 6, the camera body 100 comprises the CMOS image sensor 110, a camera monitor 120, an electronic viewfinder 180, a display controller 125, a manipulation unit 130, a card slot 170, a shutter unit 190, the body mount 150, a DRAM 141, an image processor 10, and the camera controller 140 (an example of a controller). These components are connected to a bus 20, allowing data to be exchanged between them via the bus 20.

(1) CMOS Image Sensor 110

The CMOS image sensor 110 converts an optical image of a subject (hereinafter also referred to as a subject image) formed by the interchangeable lens unit 200 into an image signal. As shown in Fig. 6, the CMOS image sensor 110 outputs an image signal on the basis of a timing signal produced by a timing generator 112. The image signal produced by the CMOS image sensor 110 is digitized and converted into image data by a signal processor 15 (discussed below). The CMOS image sensor 110 can acquire still picture data and moving picture data. The acquired moving picture data is also used for the display of a through-image.

The "through-image" referred to here is an image, out of the moving picture data, that is not recorded to a memory card 171. The through-image is mainly a moving picture, and is displayed on the camera monitor 120 or the electronic viewfinder (hereinafter also referred to as EVF) 180 in order to compose a moving picture or still picture.

As discussed above, the CMOS image sensor 110 has the light receiving face 110a (see Figs. 6 and 9) that receives light that has passed through the interchangeable lens unit 200. An optical image of the subject is formed on the light receiving face 110a. As shown in Fig. 9, when viewed from the rear face side of the camera body 100, the first region 110L accounts for the left half of the light receiving face 110a, while the second region 110 R accounts for the right half of the light receiving face 110a. When imaging is performed with the interchangeable lens unit 200, a left-eye optical image is formed in the first region 110L, and a right-eye optical image is formed in the second region 110R.

The CMOS image sensor 110 is an example of an imaging element that converts an optical image of a subject into an electrical image signal. "Imaging element" is a concept that encompasses the CMOS image sensor 110 as well as a CCD image sensor or other such opto-electric conversion element.

(2) Camera Monitor 120

The camera monitor 120 is a liquid crystal display, for example, and displays display-use image data as an image. This display-use image data is image data that has undergone image processing, data for displaying the imaging conditions, operating menu, and so forth of the digital camera 1, or the like, and is produced by the camera controller 140. The camera monitor 120 is capable of selectively displaying both moving and still pictures. As shown in Fig. 5, although the camera monitor 120 is disposed on the rear side of the camera body 100 in this embodiment, the camera monitor 120 can be disposed anywhere on the camera body 100.

The camera monitor 120 is an example of a display section provided to the camera body 100. The display section could also be an organic electroluminescence component, an inorganic electroluminescence component, a plasma display panel, or another such device that allows images to be displayed.

(3) Electronic Viewfinder 180

The electronic viewfinder 180 displays as an image the display-use image data produced by the camera controller 140. The EVF 180 is capable of selectively displaying both moving and still pictures. The EVF 180 and the camera monitor 120 may both display the same content, or may display different content. The EVF 180 and the camera monitor 120 are both controlled by the display controller 125.

(4) Manipulation unit 130

As shown in Figs. 1 and 2, the manipulation unit 130 has a release button 131 and a power switch 132. The release button 131 is used for shutter operation by the user. The power switch 132 is a rotary lever switch provided to the top face of the camera body 100. The manipulation unit 130 encompasses a button, lever, dial, touch panel, or the like, so long as it can be operated by the user.

(5) Card Slot 170

The card slot 170 allows the memory card 171 to be inserted. The card slot 170 controls the memory card 171 on the basis of control from the camera controller 140. More specifically, the card slot 170 stores image data on the memory card 171 and outputs image data from the memory card 171. For example, the card slot 170 stores moving picture data on the memory card 171 and outputs moving picture data from the memory card 171.

The memory card 171 is able to store the image data produced by the camera controller 140 in image processing. For instance, the memory card 171 can store uncompressed raw image files, compressed JPEG image files, or the like. Furthermore, the memory card 171 can store stereo image files in multi-picture format (MPF).

Also, image data that have been internally stored ahead of time can be outputted from the memory card 171 via the card slot 170. The image data or image files outputted from the memory card 171 are subjected to image processing by the camera controller 140. For example, the camera controller 140 produces display-use image data by subjecting the image data or image files acquired from the memory card 171 to expansion or the like.

The memory card 171 is further able to store moving picture data produced by the camera controller 140 in image processing. For instance, the memory card 171 can store moving picture files compressed according to H.264/AVC, which is a moving picture compression standard. Stereo moving picture files can also be stored. The memory card 171 can also output, via the card slot 170, moving picture data or moving picture files internally stored ahead of time. The moving picture data or moving picture files outputted from the memory card 171 are subjected to image processing by the camera controller 140. For example, the camera controller 140 subjects the moving picture data or moving picture files acquired from the memory card 171 to expansion processing and produces display-use moving picture data.

(6) Shutter Unit 190

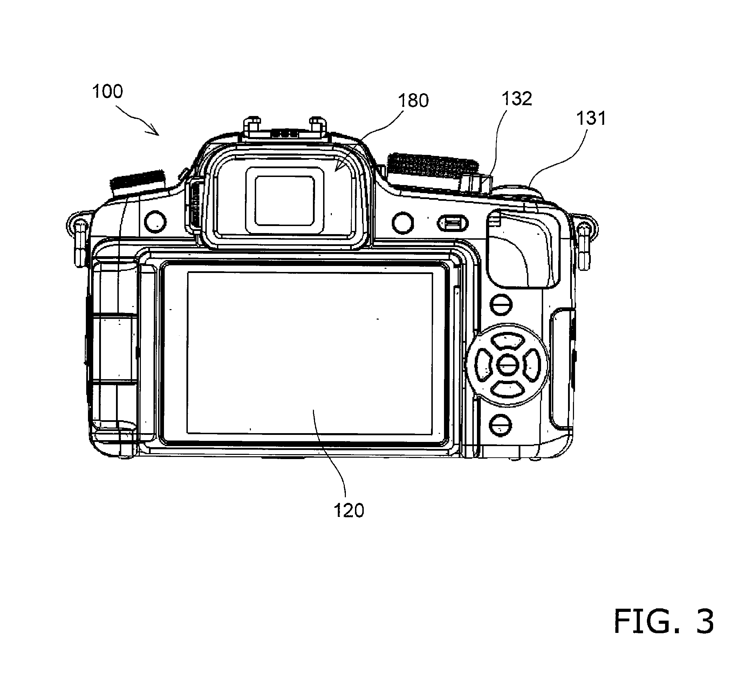

The shutter unit 190 is what is known as a focal plane shutter, and is disposed between the body mount 150 and the CMOS image sensor 110, as shown in Fig. 3. The charging of the shutter unit 190 is performed by a shutter motor 199. The shutter motor 199 is a stepping motor, for example, and is controlled by the camera controller 140.

(7) Body Mount 150

The body mount 150 allows the interchangeable lens unit 200 to be mounted, and holds the interchangeable lens unit 200 in a state in which the interchangeable lens unit 200 is mounted. The body mount 150 can be mechanically and electrically connected to the lens mount 250 of the interchangeable lens unit 200. Data and/or control signals can be sent and received between the camera body 100 and the interchangeable lens unit 200 via the body mount 150 and the lens mount 250. More specifically, the body mount 150 and the lens mount 250 send and receive data and/or control signals between the camera controller 140 and the lens controller 240.

(8) Camera Controller 140

The camera controller 140 controls the entire camera body 100. The camera controller 140 is electrically connected to the manipulation unit 130. Manipulation signals from the manipulation unit 130 are inputted to the camera controller 140. The camera controller 140 uses the DRAM 141 as a working memory during control operation or image processing operation.

Also, the camera controller 140 sends signals for controlling the interchangeable lens unit 200 through the body mount 150 and the lens mount 250 to the lens controller 240, and indirectly controls the various components of the interchangeable lens unit 200. The camera controller 140 also receives various kinds of signal from the lens controller 240 via the body mount 150 and the lens mount 250.

The camera controller 140 has a CPU (central processing unit) 140a, a ROM (read only memory) 140b, and a RAM (random access memory) 140c, and can perform various functions by reading the programs stored in the ROM 140b (an example of the computer-readable storage medium) into the CPU 140a.

Details of Camera Controller 140

The functions of the camera controller 140 will now be described in detail.

First, the camera controller 140 detects whether or not the interchangeable lens unit 200 is mounted to the camera body 100 (more precisely, to the body mount 150). More specifically, as shown in Fig. 6, the camera controller 140 has a lens detector 146. When the interchangeable lens unit 200 is mounted to the camera body 100, signals are exchanged between the camera controller 140 and the lens controller 240. The lens detector 146 determines whether or not the interchangeable lens unit 200 has been mounted on the basis of this exchange of signals.

Also, the camera controller 140 has various other functions, such as the function of determining whether or not the interchangeable lens unit mounted to the body mount 150 is compatible with three-dimensional imaging, and the function of acquiring information related to three-dimensional imaging from the interchangeable lens unit. The camera controller 140 has an identification information acquisition section 142, a characteristic information acquisition section 143, a camera-side determination section 144, a state information acquisition section 145, a region decision section 149, a metadata production section 147, and an image file production section 148.

The identification information acquisition section 142 acquires the lens identification information F1, which indicates whether or not the interchangeable lens unit 200 is compatible with three-dimensional imaging, from the interchangeable lens unit 200 mounted to the body mount 150. As shown in Fig. 7A, the lens identification information F1 is information indicating whether or not the interchangeable lens unit mounted to the body mount 150 is compatible with three-dimensional imaging, and is stored in the flash memory 242 of the lens controller 240, for example. The lens identification information F1 is a three-dimensional imaging determination flag stored at a specific address in the flash memory 242. The identification information acquisition section 142 temporarily stores the acquired lens identification information F1 in the DRAM 141, for example.

The camera-side determination section 144 determines whether or not the interchangeable lens unit 200 mounted to the body mount 150 is compatible with three-dimensional imaging on the basis of the lens identification information F1 acquired by the identification information acquisition section 142. If it is determined by the camera-side determination section 144 that the interchangeable lens unit 200 mounted to the body mount 150 is compatible with three-dimensional imaging, the camera controller 140 permits the execution of a three-dimensional imaging mode. On the other hand, if it is determined by the camera-side determination section 144 that the interchangeable lens unit 200 mounted to the body mount 150 is not compatible with three-dimensional imaging, the camera controller 140 does not execute the three-dimensional imaging mode. In this case the camera controller 140 permits the execution of a two-dimensional imaging mode.

The characteristic information acquisition section 143 acquires from the interchangeable lens unit 200 the lens characteristic information F2, which indicates the characteristics of the optical system installed in the interchangeable lens unit 200. More specifically, the characteristic information acquisition section 143 acquires the above-mentioned lens characteristic information F2 from the interchangeable lens unit 200 when it has been determined by the camera-side determination section 144 that the interchangeable lens unit 200 is compatible with three-dimensional imaging. The characteristic information acquisition section 143 temporarily stores the acquired lens characteristic information F2 in the DRAM 141, for example.

To describe the functions of the characteristic information acquisition section 143 in further detail, the characteristic information acquisition section 143 has a rotation information acquisition section 143a, a layout information acquisition section 143b, and an inversion information acquisition section 143c.

The rotation information acquisition section 143a acquires status information (an example of rotation information) about a 180 degree rotation flag of the lens characteristic information F2 from the interchangeable lens unit mounted to the body mount 150. The 180 degree rotation flag indicates whether or not the interchangeable lens unit forms on the imaging element an optical image that is rotated with respect to the subject. More specifically, the 180 degree rotation flag indicates whether the interchangeable lens unit has an optical system such as the three-dimensional optical system G, or has an optical system such as a three-dimensional optical system G4 discussed below (an example of a second stereoscopic optical system; see Fig. 16A). If a 180 degree rotation flag has been raised, the extraction region will need to be rotated in the extraction of left-eye image data and right-eye image data. More precisely, if a 180 degree rotation flag has been raised, the starting position for extraction processing will need to be changed from the reference position in the extraction of left-eye image data and right-eye image data.

The layout information acquisition section 143b acquires the status of the layout change flag (an example of layout information) for the lens characteristic information F2 from the interchangeable lens unit mounted to the body mount 150. The layout flag indicates whether or not the positional relation between the left-eye optical image formed by the left-eye optical system and the right-eye optical image formed by the right-eye optical system has been switched left and right. More specifically, the layout flag indicates whether the interchangeable lens unit has an optical system such as the three-dimensional optical system G, or has an optical system such as the three-dimensional optical system G3 discussed below (see Fig. 15). If a layout flag has been raised, the positional relation between the extraction region of the left-eye image data and the extraction region of the right-eye image data will need to be switched around in the extraction of the left-eye image data and the right-eye image data. More precisely, if a layout flag has been raised, the starting point position for extraction processing of left-eye image data and the starting point position for extraction processing of right-eye image data will need to be changed in the extraction of left-eye image data and right-eye image data.

The inversion information acquisition section 143c acquires the status of a mirror inversion flag (part of inversion information) from the interchangeable lens unit mounted to the body mount 150. The mirror inversion flag indicates whether or not the left-eye optical image and the right-eye optical image are each mirror-inverted on the imaging element. If a mirror inversion flag has been raised, the extraction regions will need to be mirror-inverted left and right in the extraction of the left-eye image data and the right-eye image data. More precisely, if a mirror inversion flag has been raised, the starting point position for extraction processing of left-side image data and the starting point position for extraction processing of right-eye image data will need to be changed in the extraction of left-eye image data and right-eye image data.

The state information acquisition section 145 acquires the lens state information F3 (imaging possibility flag) produced by the state information production section 243. This lens state information F3 is used in determining whether or not the interchangeable lens unit 200 is in a state that allows imaging. The state information acquisition section 145 temporarily stores the acquired lens state information F3 in the DRAM 141, for example.

The region decision section 149 decides the size and position of the extraction regions AL2 and AR2 used in extracting the left-eye image data and the right-eye image data with an image extractor 16. More specifically, the region decision section 149 decides the size and position of the extraction regions AL2 and AR2 of the left-eye image data and the right-eye image data on the basis of the radius r of the image circles IL and IR, the left-eye deviation amount DL and right-eye deviation amount DR included in the lens characteristic information F2, and the inclination angle θ2. Furthermore, the region decision section 149 decides the starting point for extraction processing of the image data so that the left-eye image data and the right-eye image data can be properly extracted, on the basis of the 180 degree rotation flag, the layout change flag, and the mirror inversion flag.

For example, in the case of pattern 1 shown in Fig. 18, the image extractor 16 sets the starting point of the extraction region AL2 of the left-eye image data to the point PL11, and sets the starting point of the extraction region AR2 of the right-eye image data to the point PR11. In the case of pattern 3 shown in Fig. 18, the image extractor 16 sets the starting point of the extraction region AL2 to the point PL21, and sets the starting point of the extraction region AR2 to the point PR21. In the case of pattern 4 shown in Fig. 19, the image extractor 16 sets the starting point of the extraction region AL2 to the point PL41, and sets the starting point of the extraction region AR2 to the point PR41. In the case of pattern 8 shown in Fig. 19, the image extractor 16 sets the starting point of the extraction region AL2 to the point PL31, and sets the starting point of the extraction region AR2 to the point PR31. By thus changing the starting point of extraction processing on the basis of the status of each flag, the extraction of left-eye image data and right-eye image data by the image extractor 16 can be performed properly, according to the type of optical system of the interchangeable lens unit.

The metadata production section 147 produces metadata with set stereo base and angle of convergence. The stereo base and angle of convergence are used in displaying a stereo image.

The image file production section 148 produces MPF stereo image files by combining left- and right-eye image data compressed by an image compressor 17 (discussed below). The image files thus produced are sent to the card slot 170 and stored in the memory card 171, for example.

(9) Image Processor 10

The image processor 10 has the signal processor 15, the image extractor 16, a correction processor 18, and the image compressor 17.

The signal processor 15 digitizes the image signal produced by the CMOS image sensor 110, and produces basic image data for the optical image formed on the CMOS image sensor 110. More specifically, the signal processor 15 converts the image signal outputted from the CMOS image sensor 110 into a digital signal, and subjects this digital signal to digital signal processing such as noise elimination or contour enhancement. The image data produced by the signal processor 15 is temporally stored in the DRAM 141 as RAW data. The image data produced by the signal processor 15 is herein called the basic image data.

The image extractor 16 extracts left-eye image data and right-eye image data from the basic image data produced by the signal processor 15. The left-eye image data corresponds to part of the left-eye optical image QL1 formed by the left-eye optical system OL. The right-eye image data corresponds to part of the right-eye optical image QR1 formed by the right-eye optical system OR. The image extractor 16 extracts left-eye image data and right-eye image data from the basic image data held in the DRAM 141, on the basis of the extraction regions AL2 and AR2 decided by the region decision section 149. The left-eye image data and right-eye image data extracted by the image extractor 16 are temporarily stored in the DRAM 141.

The correction processor 18 performs distortion correction, shading correction, and other such correction processing on the extracted left-eye image data and right-eye image data. After this correction processing, the left-eye image data and right-eye image data are temporarily stored in the DRAM 141.

The image compressor 17 performs compression processing on the corrected left- and right-eye image data stored in the DRAM 141, on the basis of a command from the camera controller 140. This compression processing reduces the image data to a smaller size than that of the original data. An example of the method for compressing the image data is the JPEG (Joint Photographic Experts Group) method in which compression is performed on the image data for each frame. The compressed left-eye image data and right-eye image data are temporarily stored in the DRAM 141.

Operation of Digital Camera

(1) When Power is On

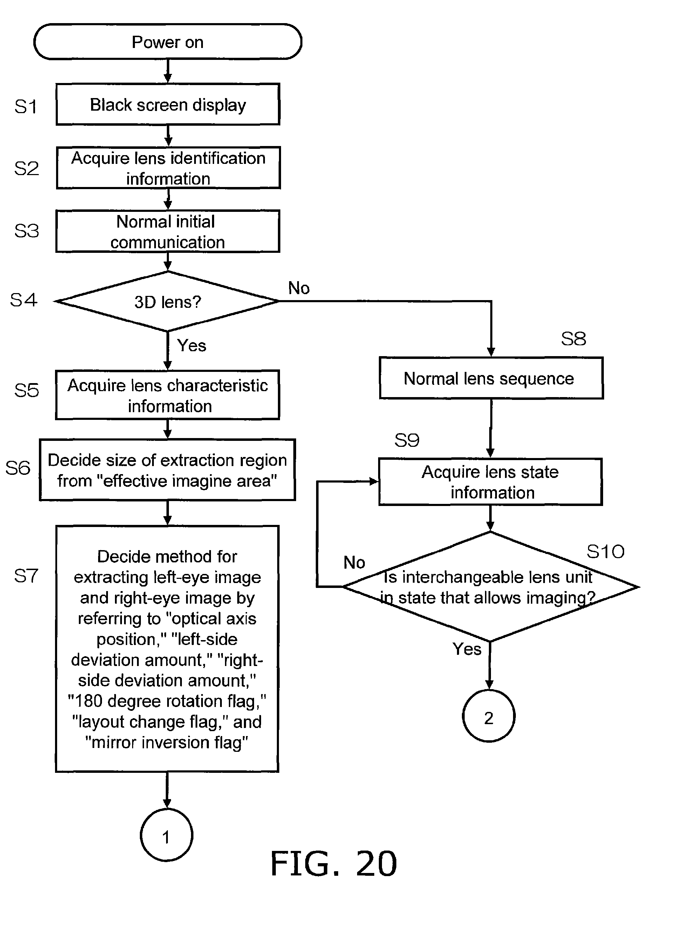

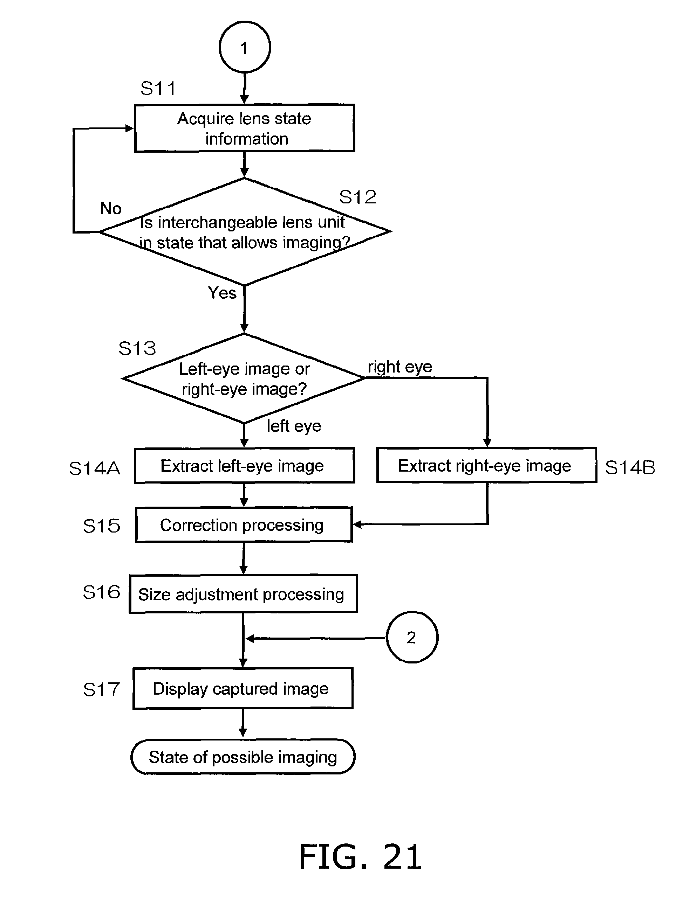

Determination of whether or not the interchangeable lens unit 200 is compatible with three-dimensional imaging is possible either when the interchangeable lens unit 200 is mounted to the camera body 100 in a state in which the power to the camera body 100 is on, or when the power is turned on to the camera body 100 in a state in which the interchangeable lens unit 200 has been mounted to the camera body 100. Here, the latter case will be used as an example to describe the operation of the digital camera 1 through reference to Figs. 8A, 8B, 20, and 21. Of course, the same operation may also be performed in the former case. Although Fig. 8B shows the operation of the digital camera 1, Fig. 8A shows the operation of a camera body and interchangeable lens 200 when the interchangeable lens 200 is mounted to the camera body that does not correspond to the three-dimensional imaging. Also, the flowcharts of Figs. 20 and 21 show the operation of the camera body 100 that corresponds to the three-dimensional imaging. As shown in Fig. 20, when the power is turned on, a black screen is displayed on the camera monitor 120 under control of the display controller 125, and the blackout state of the camera monitor 120 is maintained (step S1). Next, the identification information acquisition section 142 of the camera controller 140 acquires the lens identification information F1 from the interchangeable lens unit 200 (step S2). More specifically, as shown in Fig. 8B, when the mounting of the interchangeable lens unit 200 is detected by the lens detector 146 of the camera controller 140, the camera controller 140 sends a model confirmation command to the lens controller 240. This model confirmation command is a command that requests the lens controller 240 to send the status of a three-dimensional imaging determination flag for the lens identification information F1. As shown in Fig. 8B, since the interchangeable lens unit 200 is compatible with three-dimensional imaging, upon receiving the model confirmation command, the lens controller 240 sends the lens identification information F 1 (three-dimensional imaging determination flag) to the camera body 100. The identification information acquisition section 142 temporarily stores the status of this three-dimensional imaging determination flag in the DRAM 141.

Next, ordinary initial communication is executed between the camera body 100 and the interchangeable lens unit 200 (step S3). This ordinary initial communication is also performed between the camera body and an interchangeable lens unit that is not compatible with three-dimensional imaging. For example, information related to the specifications of the interchangeable lens unit 200 (its focal length, F stop value, etc.) is sent from the interchangeable lens unit 200 to the camera body 100.

After this ordinary initial communication, the camera-side determination section 144 determines whether or not the interchangeable lens unit 200 mounted to the body mount 150 is compatible with three-dimensional imaging (step S4). More specifically, the camera-side determination section 144 determines whether or not the mounted interchangeable lens unit 200 is compatible with three-dimensional imaging on the basis of the lens identification information F1 (three-dimensional imaging determination flag) acquired by the identification information acquisition section 142.

If the mounted interchangeable lens unit is not compatible with three-dimensional imaging, the normal sequence corresponding to two-dimensional imaging is executed, and the state information acquisition section 145 confirms lens state information indicating whether or not the interchangeable lens unit is in a state that allows imaging (steps S4, S8 and S9). The state information acquisition section 145 repeatedly confirms the lens state information at regular intervals until the interchangeable lens unit is in the state that allows imaging (step S10). When the interchangeable lens unit is in the state that allows imaging, usual two-dimensional is displayed in the camera monitor 120 in live view, and the digital camera 1 enters into the state allows imaging (step S17 in Fig. 21).

On the other hand, if an interchangeable lens unit that is compatible with three-dimensional imaging, such as the interchangeable lens unit 200, is mounted, then the lens characteristic information F2 is acquired by the characteristic information acquisition section 143 from the interchangeable lens unit 200 (step S5). More specifically, as shown in Fig. 8B, a characteristic information transmission command is sent from the characteristic information acquisition section 143 to the lens controller 240. This characteristic information transmission command is a command that requests the transmission of lens characteristic information F2.

Also, when the characteristic information transmission command is not sent from the camera body during a specific period, the lens-side determination section 244 determines that the camera body is not compatible with three-dimensional imaging (see Fig. 8A).

In the interchangeable lens unit 200, when the lens-side determination section 244 of the lens controller 240 receives the above characteristic information transmission command, the lens-side determination section 244 determines that the camera body 100 is compatible with three-dimensional imaging (see Fig. 8B). When the lens controller 240 receives the characteristic information transmission command, the lens controller 240 sends the lens characteristic information F2 to the characteristic information acquisition section 143 of the camera controller 140. The characteristic information acquisition section 143 stores the lens characteristic information F2 in the DRAM 141, for example.

As shown in Fig. 20, after acquisition of the lens characteristic information F2, the extraction method and the size of the extraction regions AL2 and AR2 are decided by the image extractor 16 on the basis of the lens characteristic information F2 (steps S6 and S7). For instance, as discussed above, the region decision section 149 decides the extraction method, that is, whether to subject the image to mirror inversion, or rotate the image, or whether to extract the image of the extraction region AL2 or AR2 as the right-eye image, and the position and size of the extraction regions AL2 and AR2, on the basis of the optical axis position, the effective imaging area (radius r), the left-eye deviation amount DL, the right-eye deviation amount DR, the 180 degree rotation flag, the layout change flag, and the mirror inversion flag. More specifically, an extraction method is decided that establishes the starting point of extraction processing, the direction of extraction processing, and so forth.

As shown in Fig. 21, after decision of the extraction method, the state information acquisition section 145 confirms whether of not the interchangeable lens unit is in the state allows imaging (step S11). More specifically, in the interchangeable lens unit 200, when the lens-side determination section 244 receives the above characteristic information transmission command, the lens-side determination section 244 determines that the camera body is compatible with three-dimensional imaging (see Fig. 8B). On the other hand, when the characteristic information transmission command is not sent from the camera body during a specific period, the lens-side determination section 244 determines that the camera body is not compatible with three-dimensional imaging (see Fig. 8A). Moreover, the state information production section 243 sets the status of an imaging possibility flag (an example of restrictive information) indicating whether or not the three-dimensional optical system G is in the proper imaging state, on the basis of the determination result of the lens-side determination section 244. When the lens-side determination section 244 has determined that the camera body is compatible with three-dimensional imaging (Fig. 8B), the state information production section 243 sets the status of the imaging possibility flag to "possible" after completing initialization of the various components. On the other hand, the state information production section 243 sets the status of the imaging possibility flag to "impossible," regardless of whether or not the initialization of the various components has been completed, when the lens-side determination section 244 has determined that the camera body is not compatible with three-dimensional imaging (see Fig. 8A). In the case of the camera body 100, in steps S9 and S11, if a command that requests the transmission of status information about the imaging possibility flag is sent from the state information acquisition section 145 to the lens controller 240, the state information production section 243 of the interchangeable lens unit 200 sends status information about the imaging possibility flag to the camera controller 140. With the camera body 100, the state information acquisition section 145 temporarily stores the status information about the imaging possibility flag sent from the lens controller 240 at a specific address in the DRAM 141.

Further, the state information acquisition section 145 determines whether or not the interchangeable lens unit 200 is in a state that allows imaging, on the basis of the stored imaging possibility flag (step S12). If the interchangeable lens unit 200 is not in a state that allows imaging, the processing of steps S11 and S12 is repeated for a specific length of time.

On the other hand, if the interchangeable lens unit 200 is in a state that allows imaging, the image used for live-view display is selected from among the left- and right-eye image data (step S13). For example, the user may select from among the left- and right-eye image data, or the one pre-decided by the camera controller 140 may be set for display use. The selected image data is set as the display-use image, and extracted by the image extractor 16 (step S 14A or 14B).

Then, the extracted image data is subjected by the correction processor 18 to distortion correction, shading correction, or other such correction processing (step S15). Further, size adjustment processing is performed on the corrected image data by the display controller 125, and display-use image data is produced (step S16). This correction-use image data is temporarily stored in the DRAM 141.

The display-use image data produced in step S16 is displayed as a visible image on the camera monitor 120 (step S17). From step S17 and subsequently, a left-eye image, a right-eye image, an image that is a combination of a left-eye image and a right-eye image, or a three-dimensional display using a left-eye image and a right-eye image is displayed in live view on the camera monitor 120.

(2) Three-Dimensional Still Picture Imaging

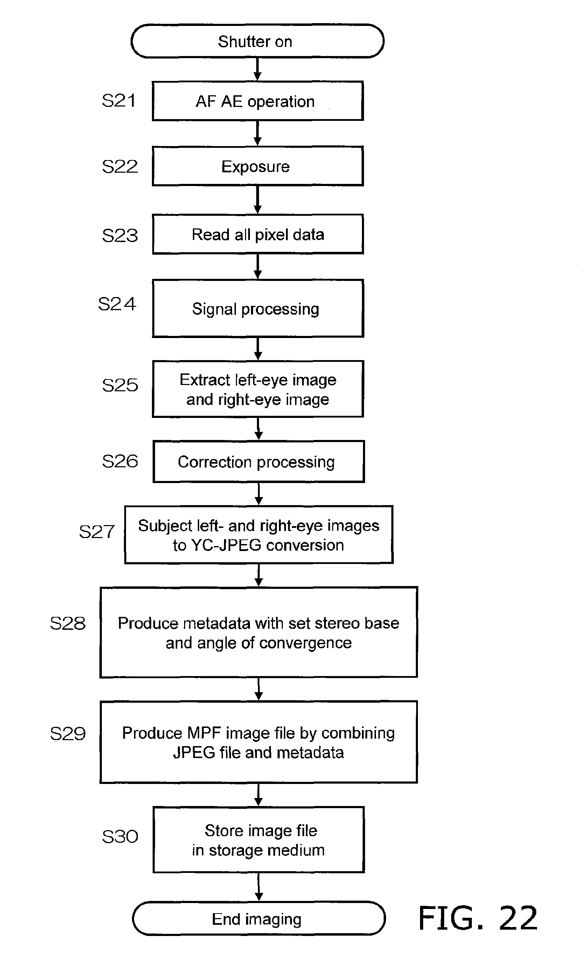

The operation in three-dimensional still picture imaging will now be described through reference to Fig. 22.

When the user presses the release button 131, autofocusing (AF) and automatic exposure (AE) are executed, and then exposure is commenced (steps S21 and S22). An image signal from the CMOS image sensor 110 (full pixel data) is taken in by the signal processor 15, and the image signal is subjected to AD conversion or other such signal processing by the signal processor 15 (steps S23 and S24). The basic image data produced by the signal processor 15 is temporarily stored in the DRAM 141.

Next, the image extractor 16 extracts left-eye image data and right-eye image data from the basic image data (step S25). The size and position of the extraction regions AL2 and AR2 here, and the extraction method, depend on the values decided in steps S6 and S7. In deciding the positions of the extraction regions AL2 and AR2, the movement vector may be calculated from the basic image, and this movement vector utilized to adjust the extraction regions AL2 and AR2.

The correction processor 18 then subjects the extracted left-eye image data and right-eye image data to correction processing, and the image compressor 17 performs JPEG compression or other such compression processing on the left-eye image data and right-eye image data (steps S26 and S27).

After compression, the metadata production section 147 of the camera controller 140 produces metadata setting the stereo base and the angle of convergence (step S28).

After metadata production, the compressed left- and right-eye image data are combined with the metadata, and MPF image files are produced by the image file production section 148 (step S29). The produced image files are sent to the card slot 170 and stored in the memory card 171, for example. If these image files are displayed in 3D using the stereo base and the angle of convergence, the displayed image can be seen in stereoscopic view using special glasses or the like.

Characteristics of Camera Body

The characteristics of the camera body described above are compiled below.

(1) With the camera body 100, lens identification information is acquired by the identification information acquisition section 142 from the interchangeable lens unit mounted to the body mount 150. For example, the lens identification information F1, which indicates whether or not the interchangeable lens unit 200 is compatible with three-dimensional imaging, is acquired by the identification information acquisition section 142 from the interchangeable lens unit 200 mounted to the body mount 150. Accordingly, when a interchangeable lens unit 200 that is compatible with three-dimensional imaging is mounted to the camera body 100, the camera-side determination section 144 decides that the interchangeable lens unit 200 is compatible with three-dimensional imaging on the basis of the lens identification information F1. Conversely, when an interchangeable lens unit that is not compatible with three-dimensional imaging is mounted, the camera-side determination section 144 decides that the interchangeable lens unit is not compatible with three-dimensional imaging on the basis of the lens identification information F1.

Thus, this camera body 100 is compatible with various kinds of interchangeable lens unit, such as interchangeable lens units that are and are not compatible with three-dimensional imaging.

(2) Also, with the camera body 100, the lens characteristic information F2, which indicates the characteristics of an interchangeable lens unit (such as the characteristics of the optical system), is acquired by the characteristic information acquisition section 143. For example, lens characteristic information F2 indicating the characteristics of the three-dimensional optical system G installed in the interchangeable lens unit 200 is acquired by the characteristic information acquisition section 143 from the interchangeable lens unit 200. Therefore, image processing and other such operations in the camera body 100 can be adjusted according to the characteristics of the three-dimensional optical system installed in the interchangeable lens unit.

Also, if it is determined by the camera-side determination section 144 that the interchangeable lens unit mounted to the body mount 150 is compatible with three-dimensional imaging, the lens characteristic information F2 is acquired by the characteristic information acquisition section 143 from the interchangeable lens unit. Therefore, if the interchangeable lens unit is not compatible with three-dimensional imaging, superfluous exchange of data can be omitted, which should speed up the processing performed by the camera body 100.

(3) With this camera body 100, the region decision section 149 uses the radius r, the left-eye deviation amount DL, the right-eye deviation amount DR, and the inclination angle θ2 to decide the side and position of the extraction regions AL2 and AR2 for left-eye image data and right-eye image data with respect to an image signal. Therefore, this keeps the extraction regions AL2 and AR2 of the left-eye image data and right-eye image data from deviating too much from the regions where they are actually supposed to be extracted, due to attachment error or individual differences between interchangeable lens units. This in turn minimizes a decrease in the quality of the stereo image that would otherwise be attributable to individual differences in finished products.

(4) Also, the region decision section 149 decides the extraction method (such as the direction of processing, the starting point of extraction processing, and so forth) on the basis of a 180 degree rotation flag, a layout change flag, a mirror inversion flag, or a combination of these. Consequently, the camera controller 140 (an example of a controller) can produce the proper stereo image data even if the optical image on the light receiving face 110a should end up being rotated, or if the positional relation should be switched around between the left-eye optical image and the right-eye optical image, or the left- and right-eye optical images should be mirror-inverted.

(5) For example, the region decision section 149 decides the extraction method on the basis of a 180 degree rotation flag. Therefore, even if an interchangeable lens unit that forms on the light receiving face 110a an optical image that is rotated with respect to the subject is mounted to the body mount 150 (the case shown in Figs. 16A to 16D, for example), the image extractor 16 can produce left-eye image data and right-eye image data so that the top and bottom of the pair of images reproduced from the left-eye image data and right-eye image data coincide with the top and bottom of the subject. Therefore, no matter what kind of interchangeable lens unit 200 is mounted to the body mount 150, the stereo image can be prevented from being upside-down.

(6) Also, the region decision section 149 decides the starting point for extraction processing on the basis of a layout change flag. Therefore, as shown at the top of Fig. 18, if the interchangeable lens unit 200 mounted to the body mount 150 has a left-eye optical system OL (an example of a first optical system) that forms the left-eye optical image QL1 in the first region 110L, and a right-eye optical system OR (an example of a second optical system) that forms the right-eye optical image QR1 in the second region 110R, the image extractor 16 (an example of a controller) can produce left-eye image data from an image signal corresponding to the first region 110L, and can produce right-eye image data from an image signal corresponding to the second region 110R.

Also, as shown in the middle of Fig. 18, if the interchangeable lens unit 300 mounted to the body mount 150 has the left-eye optical system OL3 (an example of a third optical system) that forms the left-eye optical image QL2 in the second region 110R, and the right-eye optical system OR3 (an example of a fourth optical system) that forms the right-eye optical image QR2 in the first region 110L, the image extractor 16 (an example of a controller) can produce left-eye image data from an image signal corresponding to the second region 110R, and can produce right-eye image data from an image signal corresponding to the first region 110L.

Thus, with this camera body 100, even when an interchangeable lens unit is mounted with which the positional relation between the left-eye optical image and the right-eye optical image is switched around on the light receiving face 110a of the CMOS image sensor 110, the left-eye image data will be produced on the basis of the left-eye optical image, and the right-eye image data will be produced on the basis of the right-eye optical image. Therefore, no matter what type of interchangeable lens unit is mounted to the body mount 150, the positional relation between the starting point of the left-eye image data and the starting point of the right-eye image data can be prevented from being switched around in performing three-dimensional imaging.

(7) Further, the image extractor 16 decides the starting point of extraction processing on the basis of a mirror inversion flag. Therefore, even if an interchangeable lens unit that mirror-inverts the left-eye optical image corresponding to the left-eye image data on the light receiving face 110a with respect to the subject is mounted to the body mount 150, the image extractor 16 can produce left-eye image data so that the top and bottom and the left and right of the left-eye image reproduced from left-eye image data coincide with the top and bottom and with the left and right of the subject.

Also, even if an interchangeable lens unit 200 that mirror-inverts the right-eye optical image corresponding to the right-eye image data on the light receiving face 110a with respect to the subject is mounted to the body mount 150, the image extractor 16 can produce right-eye image data so that the top and bottom and the left and right of the right-eye image reproduced from right-eye image data coincide with the top and bottom and with the left and right of the subject.

(8) When an interchangeable lens unit that is not compatible with three-dimensional imaging is mounted to the body mount 150, the camera controller 140 does not execute control in three-dimensional imaging mode at least until there is some input from the user. Therefore, with this camera body 100, images that are undesirable in terms of stereoscopic view can be prevented from being captured.

(9) As discussed above, this camera body 100 is compatible with various kinds of interchangeable lens unit, such as interchangeable lens units that are and are not compatible with three-dimensional imaging.

Features of Interchangeable Lens Unit

The interchangeable lens unit 200 also has the following features.

(1) With this interchangeable lens unit 200, when it is determined by the lens-side determination section 244 that the camera body 100 is not compatible with three-dimensional imaging, the state information production section 243 sends the camera body status information (an example of restrictive information) about an imaging possibility flag indicating that the three-dimensional optical system G is not in the proper imaging state. Therefore, this prevents two-dimensional imaging from being accidentally performed with an optical system intended for three-dimensional imaging use.

(2) Also, when a characteristic information transmission command requesting the transmission of lens characteristic information F2 has not been sent from the camera body, the lens-side determination section 244 determines that the camera body is not compatible with three-dimensional imaging. Therefore, even if the camera body was never intended to be used for three-dimensional imaging, it can be determined on the interchangeable lens unit 200 side that the camera body is not compatible with three-dimensional imaging.

Other Embodiments

The present invention is not limited to or by the above embodiments, and various changes and modifications are possible without departing from the gist of the invention.

(A) An imaging device and a camera body were described using as an example the digital camera 1 having no mirror box, but compatibility with three-dimensional imaging is also possible with a digital single lens reflex camera having a mirror box. The imaging device may be one that is capable of capturing not only of still pictures, but also moving pictures.

(B) An interchangeable lens unit was described using the interchangeable lens unit 200 as an example, but the constitution of the three-dimensional optical system is not limited to that in the above embodiments. As long as imaging can be handled with a single imaging element, the three-dimensional optical system may have some other constitution.

(C) The three-dimensional optical system G is not limited to a side-by-side imaging system, and a time-division imaging system may instead be employed as the optical system for the interchangeable lens unit, for example. Also, in the above embodiments, an ordinary side-by-side imaging system was used as an example, but a horizontal compression side-by-side imaging system in which left- and right-eye images are compressed horizontally, or a rotated side-by-side imaging system in which left- and right-eye images are rotated 90 degrees may be employed.

(D) The flowcharts in Figs. 20 to 22 are just examples, and the flowcharts are not limited to these. For example, the normal initial communication shown in Fig. 20 (step S3) may be executed no later than step S14 in which the lens state is acquired. Also, the processing in steps S6 to S 13 shown in Fig. 20 may be executed later than step S 14.

(E) Although the 180-degree rotation flags, the layout change flags and the mirror inversion flags are separate flags in the above embodiment, these three flags can be brought together as one flag, or a part of these three flags can be brought together as one flags.

(F) In the above embodiment above, the camera-side determination section 144 determines whether or not the interchangeable lens unit is compatible with three-dimensional imaging on the basis of the three-dimensional imaging determination flag for the lens identification information F1. That is, the camera-side determination section 144 performs its determination on the basis of information to the effect that the interchangeable lens unit is compatible with three-dimensional imaging.

However, the determination of whether or not the interchangeable lens unit is compatible with three-dimensional imaging may be performed using some other information. For instance, if information indicating that the interchangeable lens unit is compatible with two-dimensional imaging is included in the lens identification information F1, it may be concluded that the interchangeable lens unit is not compatible with three-dimensional imaging.

Also, whether or not the interchangeable lens unit is compatible with three-dimensional imaging may be determined on the basis of a lens ID stored ahead of time in the lens controller 240 of the interchangeable lens unit. The lens ID may be any information with which the interchangeable lens unit can be identified. An example of a lens ID is the model number of the interchangeable lens unit product. If a lens ID is used to determine whether or not the interchangeable lens unit is compatible with three-dimensional imaging, then a list of lens ID's is stored ahead of time in the camera controller 140, for example. This list indicates which interchangeable lens units are compatible with three-dimensional imaging, and the camera-side determination section 144 compares this list with the lens ID acquired from the interchangeable lens unit to determine whether or not the interchangeable lens unit is compatible with three-dimensional imaging. Thus, a lens ID can also be used to determine whether or not an interchangeable lens unit is compatible with three-dimensional imaging. Furthermore, this list can be updated to the most current version by software updating of the camera controller 140, for example.

### INDUSTRIAL APPLICABILITY

The camera body disclosed herein can be compatible with various kinds of interchangeable lens unit. Also, the interchangeable lens unit disclosed herein can be compatible with various kinds of camera body. Therefore, with an imaging device including the camera body and interchangeable lens unit disclosed herein, it is possible to take correctly stereo images. That is, technology disclosed herein can be applied to a camera body, an interchangeable lens unit, and an imaging device.

### EXPLANATION OF REFERENCE

- 1: digital camera (an example of an imaging device)
- 15: signal processor
- 16: image extractor
- 17: image compressor
- 18: correction processor
- 100: camera body
- 110: CMOS image sensor (an example of an imaging element)
- 140: camera controller
- 140a: CPU
- 140b: ROM (an example of an angle storage section)
- 140c: RAM
- 141: DRAM
- 142: identification information acquisition section
- 143: characteristic information acquisition section
- 144: camera-side determination section
- 145: state information acquisition section
- 146: lens detector
- 147: metadata production section
- 148: image file production section
- 149: region decision section
- 150: body mount
- 200: interchangeable lens unit
- 240: lens controller
- 240a: CPU
- 240b: ROM (an example of an angle storage section)
- 240c: RAM
- 241: DRAM
- 242: flash memory (an example of a characteristic information storage section)
- 243: state information production section
- 244: lens-side determination section
- OL: left-eye optical system
- OR: right-eye optical system
- QL1: left-eye optical image
- QR1: right-eye optical image
- F1: lens identification information
- F2: lens characteristic information
- F3: lens state information
- 300: interchangeable lens unit
- 400: adapter
- 500: collimator lens
- 510: measurement-use camera body
- 520: measurement-use interchangeable lens unit
- 550: chart
- 600: interchangeable lens unit

## Claims

1. A camera body for producing image data on the basis of an optical image formed by an interchangeable lens unit, the camera body comprising:
a body mount to which the interchangeable lens unit can be mounted;
an imaging element configured to convert the optical image into an image signal; and
an identification information acquisition section with which lens identification information indicating whether or not the interchangeable lens unit is compatible with three-dimensional imaging can be acquired from the interchangeable lens unit mounted to the body mount.

2. The camera body according to Claim 1, further comprising
a camera-side determination section configured to determine whether or not the interchangeable lens unit mounted to the body mount is compatible with three-dimensional imaging on the basis of the lens identification information.

3. The camera body according to Claim 2, further comprising
a characteristic information acquisition section configured to acquire lens characteristic information indicating characteristics of the optical system installed in the interchangeable lens unit from the interchangeable lens unit, wherein
the characteristic information acquisition section acquires the lens characteristic information from the interchangeable lens unit when it has been determined by the camera-side determination section that the interchangeable lens unit is compatible with three-dimensional imaging.

4. The camera body according to Claim 3, wherein
the lens characteristic information includes data with which it is possible to identify whether or not parallel imaging is employed in the interchangeable lens unit.

5. The camera body according to Claim 3 or 4, wherein
the lens characteristic information is information with which it is possible to identify whether or not the interchangeable lens unit has a three-dimensional optical system configured to form a right-eye optical image and a left-eye optical image side by side on a light receiving face of the imaging element.

6. The camera body according to Claim 5, further comprising:
a signal processor configured to produce basic image data about an optical image formed on the imaging element by digitizing an image signal produced by the imaging element; and
a region decision section configured to decide a first extraction region for extracting part of the basic image data and for extracting left-eye image data corresponding to at least part of the left-eye optical image, and a second extraction region for extracting right-eye image data corresponding to at least part of the right-eye optical image.

7. The camera body according to Claim 6, further comprising
an angle storage section configured to store an inclination angle in the horizontal direction of a subject within the left-eye optical image or the right-eye optical image, with respect to the long-side direction of the light receiving face.

8. The camera body according to Claim 7, wherein
the region decision section is configured to use the inclination angle to decide the position of the first extraction region and the position of the second extraction region in the basic image data.

9. The camera body according to any of Claims 6 to 8, wherein
the lens characteristic information includes the radius of an image circle of the left-eye optical image and the right-eye optical image on the light receiving face of the imaging element, and
the region decision section is configured to decide the size of the first extraction region and the size of the second extraction region on the basis of the radius of the image circles.

10. The camera body according to any of Claims 6 to 9, wherein,
when the three-dimensional optical system has a left-eye optical system configured to form the left-eye optical image and a right-eye optical system configured to form the right-eye optical image, the lens characteristic information includes the relative position relation between the left-eye optical image and the right-eye optical image on the light receiving face, and
the region decision section is configured to decide the position of the first extraction region and the position of the second extraction region in the basic image data on the basis of the relative position relation.

11. The camera body according to any of Claims 6 to 9, wherein,
when the three-dimensional optical system has a left-eye optical system configured to form the left-eye optical image and a right-eye optical system configured to form the right-eye optical image, the lens characteristic information includes a left-eye offset amount of the left-eye optical image with respect to a first reference position where the left-eye optical image is supposed to be formed on the light receiving face and a right-eye offset amount of the right-eye optical image with respect to a second reference position at which the right-eye optical image is supposed to be formed on the light receiving face, and
the region decision section is configured to decide the position of the first extraction region and the position of the second extraction region in the basic image data on the basis of the left-eye optical system and the right-eye offset amount.

12. A camera body for producing image data on the basis of an optical image formed by an interchangeable lens unit, the camera body comprising:
a body mount to which the interchangeable lens unit can be mounted;
an imaging element having a light receiving face configured to receive the optical image, the imaging element configured to convert the optical image into an image signal; and
a controller configured to produce left-eye image data and right-eye image data from an image signal produced by the imaging element, wherein
the light receiving face has a first region and a second region disposed adjacent to the first region,
when the interchangeable lens unit mounted to the body mount has a first optical system configured to form a left-eye optical image in the first region and a second optical system configured to form a right-eye optical image in the second region, the controller produces left-eye image data from an image signal corresponding to the first region, and produces right-eye image data from an image signal corresponding to the second region, and
when the interchangeable lens unit mounted to the body mount has a third optical system configured to form a left-eye optical image in the second region and a fourth optical system configured to form a right-eye optical image in the first region, the controller produces left-eye image data from an image signal corresponding to the second region, and produces right-eye image data from an image signal corresponding to the first region.

13. The camera body according to Claim 12, further comprising
a disposition information acquisition section configured to acquire disposition information indicating whether the interchangeable lens unit mounted to the body mount has the first optical system and the second optical system, or has the third optical system and the fourth optical system.

14. A camera body for producing image data on the basis of an optical image formed by an interchangeable lens unit, the camera body comprising:
a body mount to which the interchangeable lens unit can be mounted;
an imaging element having a light receiving face for receiving the optical image, the imaging element configured to convert the optical image into an image signal; and
a controller configured to produce left-eye image data and right-eye image data from an image signal produced by the imaging element, wherein,
when the interchangeable lens unit mounted to the body mount has a first stereoscopic optical system configured to form on the light receiving face an optical image that is rotated with respect to the subject, the controller produces the left-eye image data and the right-eye image data such that the top and bottom of the pair of images reproduced from the left-eye image data and the right-eye image data will substantially coincide with the top and bottom of the subject, and
when the interchangeable lens unit mounted to the body mount has a second stereoscopic optical system configured to form on the light receiving face an optical image that is not rotated with respect to the subject, the controller produces the left-eye image data and the right-eye image data such that the top and bottom of the pair of images reproduced from the left-eye image data and the right-eye image data will substantially coincide with the top and bottom of the subject.

15. The camera body according to Claim 14, further comprising
a rotation information acquisition section configured to acquire from the interchangeable lens unit mounted to the body mount rotation information indicating whether the interchangeable lens unit has the first stereoscopic optical system or has the second stereoscopic optical system.

16. A camera body configured to produce image data on the basis of an optical image formed by an interchangeable lens unit, the camera body comprising:
a body mount to which the interchangeable lens unit can be mounted;
an imaging element having a light receiving face configured to receive the optical image, the imaging element configured to convert the optical image into an image signal; and
a controller configured to produce left-eye image data and right-eye image data from an image signal produced by the imaging element, wherein,
when a interchangeable lens unit configured to subject the left-eye optical image corresponding to the left-eye image data to mirror inversion on the light receiving face with respect to the subject has been mounted to the body mount, the controller produces the left-eye image data such that the top and bottom and the left and right of the left-eye image reproduced from the left-eye image data will substantially coincide with the top and bottom and the left and right of the subject.

17. The camera body according to Claim 16, further comprising
an inversion information acquisition section with which inversion information indicating whether or not the interchangeable lens unit has a first left-eye optical system configured to subject a left-eye optical image corresponding to the left-eye image data to mirror inversion on the light receiving face with respect to the subject can be acquired from the interchangeable lens unit mounted to the body mount.

18. A camera body configured to produce image data on the basis of an optical image formed by an interchangeable lens unit, the camera body comprising:
a body mount to which the interchangeable lens unit can be mounted;
an imaging element having a light receiving face configured to receive the optical image, the imaging element configured to convert the optical image into an image signal; and
a controller configured to produce left-eye image data and right-eye image data from an image signal produced by the imaging element, wherein,
when a interchangeable lens unit configured to subject the right-eye optical image corresponding to the right-eye image data to mirror inversion on the light receiving face with respect to the subject has been mounted to the body mount, the controller produces the right-eye image data such that the top and bottom and the left and right of the right-eye image reproduced from the right-eye image data will substantially coincide with the top and bottom and the left and right of the subject.

19. The camera body according to Claim 18, wherein
the inversion information indicates whether or not the interchangeable lens unit has a first right-eye optical system configured to subject a right-eye optical image corresponding to the right-eye image data to mirror inversion on the light receiving face with respect to the subj ect.

20. A camera body for producing image data on the basis of an optical image formed by an interchangeable lens unit, the camera body comprising:
a body mount to which the interchangeable lens unit can be mounted;
an imaging element configured to convert the optical image into an image signal; and
a controller configured to restrict execution of three-dimensional imaging mode at least until the user performs an operation, if an interchangeable lens unit that is not compatible with three-dimensional imaging has been mounted to the body mount.

21. An interchangeable lens unit that can be mounted to a camera body having an imaging element, the interchangeable lens unit comprising:
a three-dimensional optical system configured to form a stereoscopic optical image of a subject;
a lens-side determination section configured to determine whether or not the camera body is compatible with three-dimensional imaging; and
a state information production section configured to produce restrictive information used for restricting the photographing of the camera body, when the lens-side determination section has determined that the camera body is not compatible with three-dimensional imaging.

22. The interchangeable lens unit according to Claim 21, further comprising an identification information storage section configured to store lens characteristic information including parameters indicating the characteristics of the optical system.

23. The interchangeable lens unit according to Claim 22, wherein
the lens-side determination section determines that the camera body is not compatible with three-dimensional imaging when a command requesting transmission of the lens characteristic information has not been sent from the camera body.

24. An imaging device, comprising:
the camera body according to any of Claims 1 to 20; and
the interchangeable lens unit according to any of Claims 21 to 23.

25. A method for controlling a camera body configured to produce image data on the basis of an optical image formed by an interchangeable lens unit, the method comprising:
an identification information acquisition step in which lens identification information indicating whether or not the interchangeable lens unit is compatible with three-dimensional imaging can be acquired from the interchangeable lens unit mounted to the body mount.

26. The method for controlling the camera body according to Claim 25, further comprising
a determination step for determining whether or not the interchangeable lens unit mounted to the body mount is compatible with three-dimensional imaging on the basis of the lens identification information.

27. The method for controlling the camera body according to Claim 26, further comprising
a characteristic information acquisition step for acquiring lens characteristic information indicating characteristics of the optical system installed in the interchangeable lens unit from the interchangeable lens unit, when it has been determined by the camera-side determination section that the interchangeable lens unit is compatible with three-dimensional imaging.

28. The method for controlling the camera body according to Claim 27, wherein
the lens characteristic information includes data with which it is possible to identify whether or not parallel imaging is employed in the interchangeable lens unit.

29. The method for controlling the camera body according to Claim 27 or 28, wherein
the lens characteristic information is information with which it is possible to identify whether or not the interchangeable lens unit has a three-dimensional optical system configured to form a right-eye optical image and a left-eye optical image side by side on a light receiving face of the imaging element.

30. The method for controlling the camera body according to Claim 29, further comprising:
a signal processing step for producing basic image data about an optical image formed on the imaging element by digitizing an image signal produced by the imaging element; and
a region decision step for deciding a first extraction region for extracting part of the basic image data and for extracting left-eye image data corresponding to at least part of the left-eye optical image, and a second extraction region for extracting right-eye image data corresponding to at least part of the right-eye optical image.

31. The method for controlling the camera body according to Claim 30, further comprising
in the region decision step, the position of the first extraction region and the position of the second extraction region in the basic image data is decided, using an inclination angle in the horizontal direction of a subject within the left-eye optical image or the right-eye optical image, with respect to the long-side direction of the light receiving face.

32. The method for controlling the camera body according to Claim 30 or 31, wherein
the lens characteristic information includes the radius of an image circle of the left-eye optical image and the right-eye optical image on the light receiving face of the imaging element, and
in the region decision step, the size of the first extraction region and the size of the second extraction region on the basis of the radius of the image circles is decided.

33. The camera body according to any of Claims 30 to 32, wherein,
when the three-dimensional optical system has a left-eye optical system configured to form the left-eye optical image and a right-eye optical system configured to form the right-eye optical image, the lens characteristic information includes the relative position relation between the left-eye optical image and the right-eye optical image on the light receiving face, and
in the region decision step, the position of the first extraction region and the position of the second extraction region in the basic image data on the basis of the relative position relation is decided.

34. The camera body according to any of Claims 30 to 33, wherein,
when the three-dimensional optical system has a left-eye optical system configured to form the left-eye optical image and a right-eye optical system configured to form the right-eye optical image, the lens characteristic information includes a left-eye offset amount of the left-eye optical image with respect to a first reference position where the left-eye optical image is supposed to be formed on the light receiving face and a right-eye offset amount of the right-eye optical image with respect to a second reference position at which the right-eye optical image is supposed to be formed on the light receiving face, and
in the region decision step, the position of the first extraction region and the position of the second extraction region in the basic image data on the basis of the left-eye optical system and the right-eye offset amount is decided.

35. A program configured to cause a computer to perform a method for controlling a camera body configured to produce image data on the basis of an optical image formed by an interchangeable lens unit, the method comprising:
an identification information acquisition step in which lens identification information indicating whether or not the interchangeable lens unit is compatible with three-dimensional imaging can be acquired from the interchangeable lens unit mounted to the body mount.

36. A computer-readable storage medium storing a program configured to cause a computer to perform a method for controlling a camera body configured to produce image data on the basis of an optical image formed by an interchangeable lens unit, the method comprising:
an identification information acquisition step in which lens identification information indicating whether or not the interchangeable lens unit is compatible with three-dimensional imaging can be acquired from the interchangeable lens unit mounted to the body mount.

37. A method for controlling a camera body configured to produce left-eye image data and right-eye image data on the basis of an optical image formed by an interchangeable lens unit, the method comprising the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

38. The method for controlling the camera body according to Claim 37, further comprising:
a disposition information acquisition step for acquiring disposition information indicating whether the interchangeable lens unit mounted to the body mount has the first optical system and the second optical system, or has the third optical system and the fourth optical system.

39. A program configured to cause a computer to perform a method for controlling a camera body configured to produce image data on the basis of an optical image formed by an interchangeable lens unit, the method comprising the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

40. A computer-readable storage medium storing a program configured to cause a computer to perform a method for controlling a camera body configured to produce left-eye image data and right-eye image data on the basis of an optical image formed by an interchangeable lens unit, the method comprising the steps of:
producing left-eye image data from an image signal corresponding to the first region, and right-eye image data from an image signal corresponding to the second region, when the interchangeable lens unit mounted to the body mount has a first optical system configured to form a left-eye optical image in the first region and a second optical system configured to form a right-eye optical image in the second region, and
producing left-eye image data from an image signal corresponding to the second region, and right-eye image data from an image signal corresponding to the first region, when the interchangeable lens unit mounted to the body mount has a third optical system configured to form a left-eye optical image in the second region and a fourth optical system configured to form a right-eye optical image in the first region.

41. A method for controlling a camera body configured to produce left-eye image data and right-eye image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

42. The method for controlling the camera body according to Claim 41, further comprising:
a rotation information acquisition step for acquiring from the interchangeable lens unit mounted to the body mount rotation information indicating whether the interchangeable lens unit has the first stereoscopic optical system or has the second stereoscopic optical system.

43. A program configured to cause a computer to perform a method for controlling a camera body configured to produce left-eye image data and right-eye image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

44. A computer-readable storage medium storing a program configured to cause a computer to perform a method for controlling a camera body configured to produce left-eye image data and right-eye image data on the basis of an optical image formed by an interchangeable lens unit, the method comprising the steps of:
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a first stereoscopic optical system configured to form on the light receiving face an optical image that is rotated with respect to the subject, and
producing the left-eye image data and the right-eye image data such that the top and bottom of the pair of images reproduced from the left-eye image data and the right-eye image data will substantially coincide with the top and bottom of the subject, when the interchangeable lens unit mounted to the body mount has a second stereoscopic optical system configured to form on the light receiving face an optical image that is not rotated with respect to the subj ect.

45. A method for controlling a camera body configured to produce left-eye image data and right-eye image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

46. The method for controlling the camera body according to Claim 45, further comprising
an inversion information acquisition step for acquiring inversion information indicating whether or not the interchangeable lens unit has a first left-eye optical system configured to subject a left-eye optical image corresponding to the left-eye image data to mirror inversion on the light receiving face with respect to the subject from the interchangeable lens unit mounted to the body mount.

47. A program configured to cause a computer to perform a method for controlling a camera body configured to produce left-eye image data and right-eye image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

48. A computer-readable storage medium storing a program configured to cause a computer to perform a method for controlling a camera body configured to produce image data on the basis of an optical image formed by an interchangeable lens unit, the method comprising:
a left-eye image production step for producing the left-eye image data such that the top and bottom and the left and right of the left-eye image reproduced from the left-eye image data will substantially coincide with the top and bottom and the left and right of the subject, when a interchangeable lens unit configured to subject the left-eye optical image corresponding to the left-eye image data to mirror inversion on the light receiving face with respect to the subject has been mounted to the body mount.

49. A method for controlling a camera body configured to produce left-eye image data and right-eye image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

50. The method for controlling the camera body according to Claim 49, wherein
the inversion information indicates whether or not the interchangeable lens unit has a first right-eye optical system configured to subject a right-eye optical image corresponding to the right-eye image data to mirror inversion on the light receiving face with respect to the subj ect.

51. A program configured to cause a computer to perform a method for controlling a camera body configured to produce left-eye image data and right-eye image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

52. A computer-readable storage medium storing a program configured to cause a computer to perform a method for controlling a camera body configured to produce image data on the basis of an optical image formed by an interchangeable lens unit, the method comprising:
a right-eye image production step for producing the right-eye image data such that the top and bottom and the left and right of the right-eye image reproduced from the right-eye image data will substantially coincide with the top and bottom and the left and right of the subject, when a interchangeable lens unit configured to subject the right-eye optical image corresponding to the right-eye image data to mirror inversion on the light receiving face with respect to the subject has been mounted to the body mount.

53. A method for controlling a camera body configured to produce left-eye image data and right-eye image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

54. A program configured to cause a computer to perform a method for controlling a camera body configured to produce image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

55. A computer-readable storage medium storing a program configured to cause a computer to perform a method for controlling a camera body configured to produce image data on the basis of an optical image formed by an interchangeable lens unit, the method comprising:
a step for restricting execution of three-dimensional imaging mode at least until the user performs an operation, if an interchangeable lens unit that is not compatible with three-dimensional imaging has been mounted to the body mount.

56. A method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.

57. The method for controlling the interchangeable lens unit according to Claim 56, wherein
lens characteristic information includes parameters indicating the characteristics of the optical system, and
in the determination step, a controller determines that the camera body is not compatible with three-dimensional imaging when a command requesting transmission of the lens characteristic information has not been sent from the camera body.

58. A program configured to cause a computer to perform a method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.

59. A computer-readable storage medium storing a program configured to cause a computer to perform a method for controlling an interchangeable lens unit that can be mounted to a camera body having an imaging element, the method comprising:
a determination step for determining whether or not the camera body is compatible with three-dimensional imaging; and
a state information production step for producing restrictive information used for restricting the photographing of the camera body, when the lens-side determination section has determined that the camera body is not compatible with three-dimensional imaging.
